# EUROPEAN PATENT APPLICATION

(11) **EP 4 823 082 A1**
(43) Date of publication of application: **14.10.2026**
(21) Application number: 26170222.9
(22) Date of filing: 01.04.2026
(51) Int. Cl.: H04N 1/00, G06F 3/12

(54) **INSPECTION SYSTEM THAT INSPECTS PRINTED MATTER AND CONTROL METHOD FOR INSPECTION SYSTEM**

(30) Priority: 08.04.2025 JP 2025063793
(71) Applicant: Canon Kabushiki Kaisha, Tokyo 146-8501 (JP)
(72) Inventor: YOSHIDA, Satoshi, Tokyo (JP)
(74) Representative: WESER & Kollegen Patentanwälte PartmbB

(57) **Abstract**

An inspection system (10) inspects printed matter output by an image forming apparatus (100). The inspection system included a memory device (253) that stores a set of instructions, and at least one processor (251) that executes the set of instructions to store inspection settings used for inspection of the printed matter, receive a predetermined instruction accompanying selection of a plurality of different inspection settings from among the inspection settings stored from a user, and synthesize (S1307) the plurality of different inspection settings according to the predetermined instruction.

## Description

### TECHNICAL FIELD

The aspect of the embodiments relates to an inspection system that inspects printed matter and a control method for the inspection system.

### BACKGROUND

Conventionally, inspection (a quality check) for confirming whether printed matter is printed correctly has been performed manually, but in recent years, an inspection system that automatically performs a quality check as a post-process of a printing device has been developed. In the inspection system, an inspection setting representing quality of inspection, such as an inspection area or an inspection level, can be set for a job to be inspected. In the inspection system, for example, an inspection setting set in advance before actual printing or an inspection setting used in an already executed inspection job is used (see, for example, Japanese Patent Laid-Open Publication No. 2022-067104).

### SUMMARY

However, the technique of the above-described publication requires a new inspection setting, even when inspection is desired to be performed with an inspection setting similar to the inspection setting set in advance or the inspection setting used in the already executed inspection job, which causes trouble.

The present disclosure provides a mechanism that can reduce trouble in performing an inspection setting.

The present disclosure in its first aspect provides an inspection system as specified in claim 1. Optional features are specified in claim 2 to 17.

The present disclosure in its second aspect provides an exposure method as specified in claim 18.

According to the present invention, trouble of setting an inspection setting can be reduced.

Features of the present disclosure will become apparent from the following description of embodiments with reference to the attached drawings. The following description of embodiments is described by way of example.

### BRIEF DESCRIPTION OF THE DRAWINGS

FIG. 1 is a configuration diagram illustrating an inspection system including an inspection apparatus according to an embodiment of the present disclosure.
FIG. 2 is a block diagram schematically illustrating hardware configurations of an image forming apparatus, an inspection unit, a large-capacity stacker, a client PC, an information processing apparatus, and the inspection apparatus in FIG. 1.
FIG. 3 is a block diagram schematically illustrating software configurations of the image forming apparatus, the inspection unit, the large-capacity stacker, the client PC, the information processing apparatus, and the inspection apparatus in FIG. 1.
FIG. 4 is a diagram illustrating an example of an inspection method selection screen for receiving a print job setting from a user in the client PC in FIG. 1.
FIG. 5 is a flowchart illustrating a procedure of a job transmission process executed by the information processing apparatus in FIG. 1.
FIG. 6 is a flowchart illustrating a procedure of an inspection setting registration process executed by the inspection apparatus in FIG. 1.
FIG. 7 is a diagram illustrating an example of an inspection setting screen displayed on a UI unit of the inspection apparatus in FIG. 2.
FIG. 8 is a diagram illustrating an example of a preset setting screen displayed on the UI unit of the inspection apparatus in FIG. 2.
FIGS. 9A to 9E are diagrams illustrating examples of previews displayed in an area on the inspection setting screen in FIG. 7.
FIGS. 10A to 10C are tables representing a method for storing an inspection setting in the present embodiment.
FIG. 11 is a diagram illustrating an example of a reference image management screen displayed on the UI unit of the inspection apparatus in FIG. 2.
FIG. 12 is a flowchart illustrating a procedure of an inspection process executed by the inspection apparatus in FIG. 1.
FIG. 13 is a flowchart illustrating a procedure of an inspection setting process in a step S1205 in FIG. 12.
FIGS. 14A to 14C are diagrams illustrating examples of the inspection setting screen displayed on the UI unit of the inspection apparatus in FIG. 2.
FIGS. 15A to 15C are diagrams illustrating examples of the inspection setting screen displayed on the UI unit of the inspection apparatus in FIG. 2.

### DESCRIPTION OF THE EMBODIMENTS

Hereinafter, embodiments for carrying out the present disclosure will be described with reference to the drawings. Unless otherwise specified, the present disclosure is applicable to an inspection apparatus composed of a single device and an inspection apparatus composed of a plurality of devices as long as functions related to the present disclosure are achieved. Further, unless otherwise specified, the present disclosure is applicable to an inspection apparatus that is connected via a network such as a local area network (LAN) or a wide area network (WAN) and that performs a process as long as functions of the present disclosure are achieved. That is, a system configuration to which various terminals described in the following embodiments are connected is an example, and there are various configuration examples according to applications or purposes.

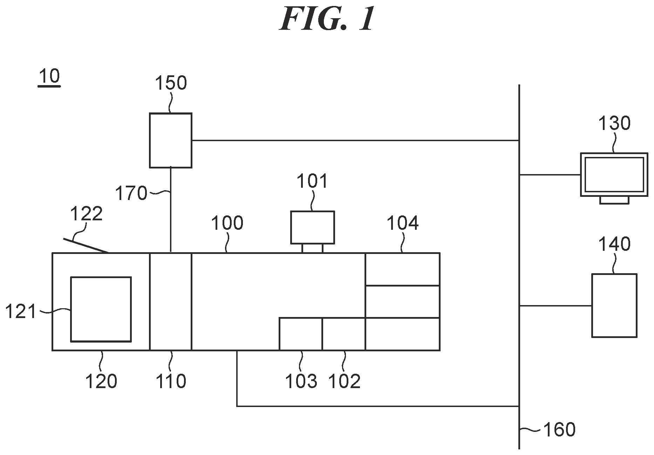

FIG. 1 is a configuration diagram of an inspection system 10 according to the embodiment of the present disclosure.

The inspection system 10 includes an image forming apparatus 100, an inspection unit 110, a large-capacity stacker 120, and an inspection apparatus 150. The image forming apparatus 100 is communicably connected to a client PC 130, an information processing apparatus 140, and the inspection apparatus 150 via a network 160. Further, the inspection apparatus 150 is connected to the inspection unit 110 via a communication cable 170.

The image forming apparatus 100 includes a UI unit 101, a feed deck 102, and a feed deck 103. Further, an option deck 104 composed of three stages of feed decks is connected to the image forming apparatus 100. A recording sheet such as printing paper can be set in each deck. The image forming apparatus 100 performs a printing process based on various types of input data, for example, print data transmitted from the client PC 130 or the information processing apparatus 140. Then, the inspection unit 110 and the large-capacity stacker 120 are connected to the image forming apparatus 100 via a communication cable (not shown) that is an internal bus.

The inspection unit 110 receives printed matter output from the image forming apparatus 100, and obtains image data to inspect whether the received printed matter includes an abnormal image. Here, the abnormal image includes a defect that degrades quality of the printed matter. For example, the abnormal image includes a circular defect (what is called a "spot") that occurs when coloring material adheres to an unintended location during printing, a color missing that occurs when sufficient coloring material does not adhere to an intended location, or a linear defect (what is called a "streak"). Then, the obtained image data is transferred to the inspection apparatus 150 via the communication cable 170. The inspection apparatus 150 inspects whether the printed matter includes an abnormal image, and transmits an inspection result thereof to the image forming apparatus 100.

The large-capacity stacker 120 includes a main tray 121 and a top tray 122. Several thousand sheets of paper can be stacked on the main tray 121 at once. The large-capacity stacker 120 receives an output sheet inspected by the inspection unit 110, and can also switch a sheet discharge destination of the received output sheet based on the inspection result of the inspection unit 110.

Although a configuration in which the inspection apparatus 150 performs inspection will be described in the present embodiment, this is not limited. For example, a configuration such as an in-line quality check machine that consistently performs from image formation, inspection, post-processing, to paper discharge may be employed.

A print job is generated by the client PC 130, is transmitted to the information processing apparatus 140 via the network 160, and is managed by the information processing apparatus 140. Then, the print job is transmitted from the information processing apparatus 140 to the image forming apparatus 100 through the network 160, and the image forming apparatus 100 performs a process to print an image on a sheet. Note that the print job may be generated by the information processing apparatus 140, may be transmitted to the image forming apparatus 100 via the network 160, and may be managed by the image forming apparatus 100.

Note that the client PC 130, the information processing apparatus 140, and the inspection apparatus 150 may be connected to a communication cable to communicate with the image forming apparatus 100. That is, the connection form of the image forming apparatus 100, the information processing apparatus 140, and the client PC 130 shown in the present embodiment is an example, and there are various connection forms other than that shown in the present embodiment. Further, in addition to the inspection unit 110 and the large-capacity stacker 120, a finisher capable of stapling, a folding machine, a bookbinding machine, or the like may be connected to the image forming apparatus 100.

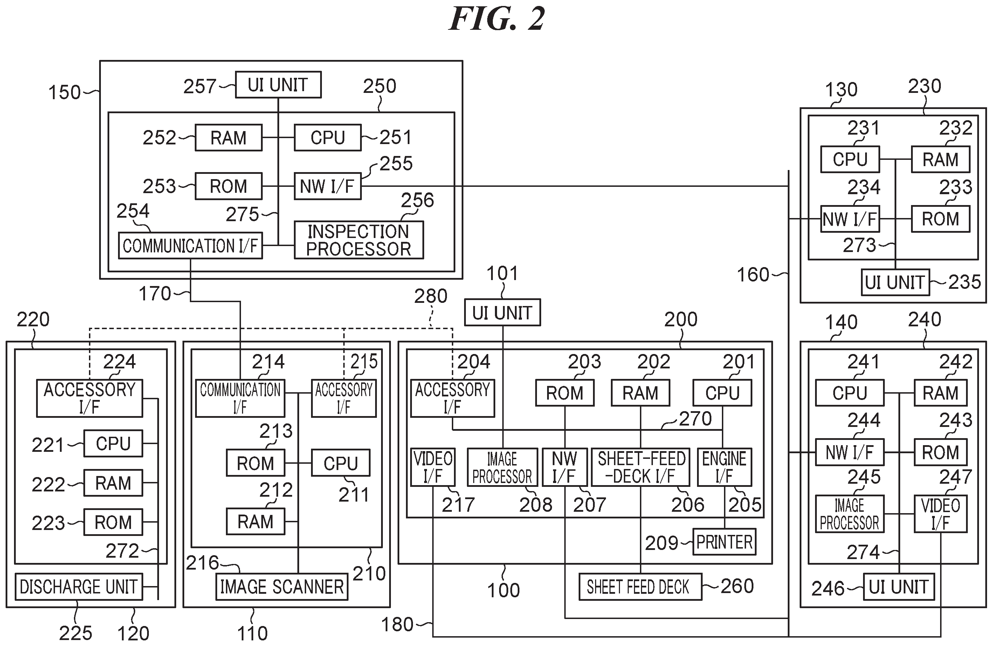

FIG. 2 is a block diagram schematically illustrating hardware configurations of the image forming apparatus 100, the inspection unit 110, the large-capacity stacker 120, the client PC 130, the information processing apparatus 140, and the inspection apparatus 150 in FIG. 1.

The client PC 130 generates a print job and transmits the print job to the information processing apparatus 140 via the network 160. The client PC 130 includes a control unit 230 and a UI unit 235. The control unit 230 includes a CPU 231, a RAM 232, a ROM 233, and a network interface (hereinafter, NW I/F) 234. Note that CPU is an abbreviation for Central Processing Unit and RAM is an abbreviation for Random Access Memory.

The CPU 231 performs control and calculation in each section in the client PC 130 via an internal bus 273, and executes a program stored in the ROM 233 and loaded into the RAM 232. The RAM 232 is a volatile storage device directly accessible from the CPU 231, and is used as a work area of the CPU 231 or as another temporary data storage area. The ROM 233 functions as a temporary storage area and a working memory during operation of the client PC 130. The NW I/F 234 transmits and receives data to and from the information processing apparatus 140 via the network 160. The UI unit 235 is configured by, for example, a keyboard, a mouse, a display, or other input/output devices, and is a device that can input various types of set values or designated values.

The information processing apparatus 140 performs an RIP process of print data or document data, and generates a bitmap image for printing by the image forming apparatus 100. Further, the information processing apparatus 140 manages control related to printing of the image forming apparatus 100 and a print job. The information processing apparatus 140 includes a control unit 240 and a UI unit 246. The control unit 240 includes a CPU 241, a RAM 242, a ROM 243, an NW I/F 244, an image processor 245, and a video I/F 247.

The CPU 241 performs control and calculation in each section in the information processing apparatus 140 via an internal bus 274, and executes a program stored in the ROM 243 and loaded into the RAM 242. The RAM 242 is a volatile storage device directly accessible from the CPU 241, and is used as a work area of the CPU 241 or as another temporary data storage area. The ROM 243 functions as a temporary storage area and a working memory during operation of the information processing apparatus 140. The NW I/F 244 communicates with the client PC 130, the image forming apparatus 100, and the inspection apparatus 150 via the network 160. Note that the inspection unit 110 may have an NW I/F, and the information processing apparatus 140 may communicate with the NW I/F of the inspection unit 110 through the NW I/F 244. For example, assuming that an RIP image that the image forming apparatus 100 uses for printing is used as a reference image that is a correct answer of inspection. In this case, the reference image may be transmitted to the inspection apparatus 150 through a communication I/F 214, or may be transmitted to the inspection apparatus 150 from the NW I/F 207 through the NW I/F of in the inspection unit 110.

The image processor 245 performs an RIP process of print data. The UI unit 246 is configured by, for example, a keyboard, a mouse, a display, or other input/output devices, and is a device that can input various types of set values or designated values.

The image forming apparatus 100 performs the printing process based on various types of input data, for example, print data transmitted from the client PC 130 or the information processing apparatus 140.

The image forming apparatus 100 is connected to the UI unit 101 and a sheet feed deck 260, respectively. Further, the image forming apparatus 100 includes a control unit 200 and a printer 209. The control unit 200 includes a CPU 201, a RAM 202, a ROM 203, an accessory I/F 204, an engine I/F 205, a sheet-feed-deck I/F 206, an NW I/F 207, an image processor 208, and a video I/F 217. Further, the control unit 200 is connected to the printer 209 via the engine I/F 205.

The CPU 201 performs control and calculation in each section in the image forming apparatus 100 via an internal bus (system bus) 270. The CPU 201 executes a program stored in the ROM 203 and loaded into the RAM 202. The RAM 202 is a volatile storage device directly accessible from the CPU 201, and is used as a work area of the CPU 201 or as another temporary data storage area. The RAM 202 functions as a temporary storage area and a working memory during operation of the image forming apparatus 100. The ROM 203 stores program data executed by the CPU 201 at boot time, set data of the control unit 200, and the like.

The accessory I/F 204 is connected to an accessory I/F 215 and an accessory I/F 224 via a cable 280. That is, the image forming apparatus 100 communicates with the inspection unit 110 and the large-capacity stacker 120 through the accessory I/F 204, 215, and 224. The engine I/F 205 performs communication with and control of the printer 209.

The sheet-feed-deck I/F 206 performs communication with and control of the sheet feed deck 260. The sheet feed deck 260 is a general term for the feed decks 102, 103, and the option deck 104 as a hardware configuration. The UI unit 101 is a user interface for performing overall operation of the image forming apparatus 100.

The NW I/F 207 is connected to the NW I/F 244 of the information processing apparatus 140 via the network 160, and performs communication between the information processing apparatus 140 and the image forming apparatus 100. Note that in this example, the interfaces connected to the internal bus 270 and the network 160 are directly connected, but the information processing apparatus 140 and the image forming apparatus 100 may be connected by, for example, a network or the like, and a connection form thereof is not limited. The video I/F 217 is connected to the video I/F 247 via a video cable 180, and performs communication of image data between the information processing apparatus 140 and the image forming apparatus 100.

Note that the connection interface with the image forming apparatus 100 in the information processing apparatus 140 may be configured by combining the functions of the NW I/F 244 and the video I/F 247. Further, the connection interface with the information processing apparatus 140 in the image forming apparatus 100 may be configured by combining the functions of the NW I/F 207 and the video I/F 217.

The image processor 208 performs a process to convert images or document data received via the video cable 180 into print data.

The printer 209 prints received binary bitmap data on a recording sheet using coloring material.

The inspection unit 110 performs control for transferring image data obtained by an image scanner 216 to the inspection apparatus 150 via the communication cable 170. Then, the inspection unit 110 obtains an inspection result from the inspection apparatus 150 and transmits it to the image forming apparatus 100 and the large-capacity stacker 120. The inspection unit 110 includes a control unit 210. The control unit 210 includes a CPU 211, a RAM 212, a ROM 213, the communication I/F 214, the accessory I/F 215, and the image scanner 216.

The CPU 211 performs control and calculation in each section in the inspection unit 110 via an internal bus 271, and executes a program stored in the ROM 213 and loaded into the RAM 212. The RAM 212 is a volatile storage device directly accessible from the CPU 211, and is used as a work area of the CPU 211 or as another temporary data storage area. The ROM 213 functions as a temporary storage area and a working memory during operation of the inspection unit 110. The communication I/F 214 communicates with the inspection apparatus 150 via the communication cable 170, and communicates data such as a scanned image scanned by the image scanner 216 or an inspection result. The accessory I/F 215 is connected to the accessory I/F 204 and the accessory I/F 224 via the cable 280. The image scanner 216 scans printed matter conveyed from the image forming apparatus 100.

The large-capacity stacker 120 includes a control unit 220 and a discharge unit 225. The control unit 220 includes a CPU 221, a RAM 222, a ROM 223, and the accessory I/F 224.

The CPU 221 performs control and calculation in each section in the large-capacity stacker 120 via an internal bus 272, and executes a program stored in the ROM 223 and loaded into the RAM 222. The RAM 222 is a volatile storage device directly accessible from the CPU 221, and is used as a work area of the CPU 221 or as another temporary data storage area. The ROM 223 functions as a temporary storage area and a working memory during operation of the large-capacity stacker 120. The discharge unit 225 performs a sheet discharge operation to the main tray 121 and the top tray 122, and monitoring and control of stacking status of each of the main tray 121 and the top tray 122.

The large-capacity stacker 120 may switch a sheet discharge destination based on an inspection result for printed matter conveyed from the inspection unit 110. For example, when the sheet discharge destination is switched based on an inspection result of whether the printed matter includes an abnormality in printed matter, a sheet with no abnormality is discharged to the main tray 121 and a sheet with an abnormality is discharged to the top tray 122. Further, a sheet may be discharged to the same sheet discharge destination regardless of an inspection result.

The inspection apparatus 150 inspects a scanned image of printed matter obtained by the inspection unit 110. The inspection apparatus 150 includes a control unit 250 and a UI unit 257. The control unit 250 includes a CPU 251, a RAM 252, a ROM 253, a communication I/F 254, an NW I/F 255, and an inspection processor 256.

The CPU 251 performs control and calculation in each section in the inspection apparatus 150 via an internal bus 275, and executes a program stored in the ROM 253 and loaded into the RAM 252. The RAM 252 is a volatile storage device directly accessible from the CPU 251, and is used as a work area of the CPU 251 or as another temporary data storage area. The ROM 253 functions as a temporary storage area and a working memory during operation of the inspection apparatus 150. The communication I/F 254 communicates with the inspection unit 110 via the communication cable 170, and communicates data such as a scanned image scanned by the image scanner 216 or an inspection result. The NW I/F 255 transmits and receives data to and from the client PC 130, the image forming apparatus 100, and the information processing apparatus 140 via the network 160. The inspection processor 256 inspects whether printed matter includes a defect. The UI unit 257 is, for example, a liquid crystal display coupled with a touch panel connected to the inspection apparatus 150, receives a user input to the inspection apparatus 150, and displays a status of the inspection apparatus 150 or an inspection result.

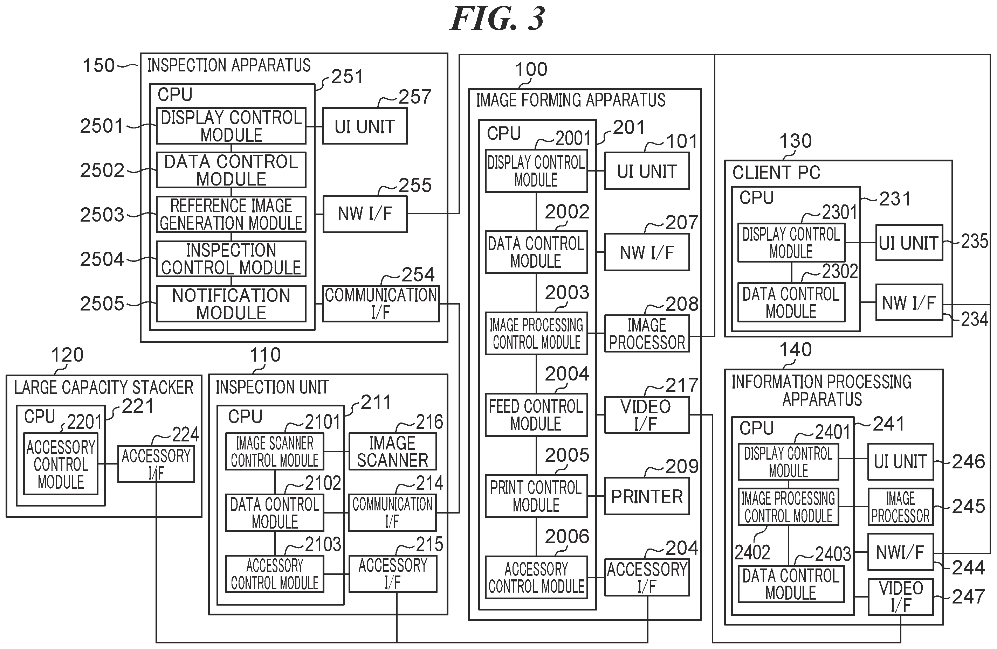

FIG. 3 is a block diagram schematically illustrating software configurations of the image forming apparatus 100, the inspection unit 110, the large-capacity stacker 120, the client PC 130, the information processing apparatus 140, and the inspection apparatus 150 in FIG. 1.

Programs for the client PC 130 are stored in the ROM 233, read into the RAM 232, and executed by the CPU 231. A processing function of the CPU 231 is composed of a display control module 2301 and a data control module 2302.

The display control module 2301 displays a screen operated by a user on the UI unit 235. Further, when the user performs setting of a print job using the UI unit 235, the display control module 2301 stores print setting information in the RAM 232, and when the user instructs execution of printing, the display control module 2301 transmits a printing execution instruction to the data control module 2302. The print setting information includes settings, such as a printing sheet size, a selection between single-sided printing and double-sided printing. In addition to this, for example, the print setting information may include a selection between face-up and face-down and a selection between normal order and reverse order.

The data control module 2302 transmits a print job to the information processing apparatus 140 via the NW I/F 234.

Programs for the information processing apparatus 140 are stored in the ROM 243, read into the RAM 242, and executed by the CPU 241. A processing function of the CPU 241 is composed of a display control module 2401, an image processing control module 2402, and a data control module 2403.

The display control module 2401 displays a screen operated by a user on the UI unit 246. Further, when the user performs setting of a print job using the UI unit 246, the display control module 2401 stores print setting information in the RAM 242, and when the user instructs execution of printing, the display control module 2401 transmits a printing execution instruction to the data control module 2403.

The image processing control module 2402 performs control of the image processor 245. When receiving the printing execution instruction, the image processing control module 2402 performs the RIP process for converting print data or document data into bitmap image data based on the print setting information stored in the RAM 242. Further, the image processing control module 2402 generates a preview image to be displayed on the UI unit when registering an inspection setting (an RIP image to be displayed on the UI unit 257 of the inspection apparatus 150 when a user performs the inspection setting). Note that the inspection setting includes set values showing an inspection area or an inspection level. Furthermore, the image processing control module 2402 generates a reference image by converting, for example, a resolution of 600 dpi to 300 dpi in the RIP process for generating the reference image. On the other hand, the image processing control module 2402 generates a 600 dpi image without lowering the resolution in the RIP process for generating the print data.

Further, the image processing control module 2402 assigns a unique image ID to an RIP image in a printing order. For example, image ID=1 is assigned to an RIP image printed first, image ID=2 is assigned to an RIP image printed second, and so on. Note that image ID=0 may be assigned to a blank sheet to indicate that the RIP image is blank.

The data control module 2403 controls reception of a print job transmitted from the client PC 130 and transmission of the received print job to the image forming apparatus 100. The data control module 2403 receives a print job from the client PC 130 via the NW I/F 244 and stores it in the RAM 242. Further, the data control module 2403 transmits a print-job start notification, print setting information, and an RIP image to the image forming apparatus 100 via the NW I/F 244 and the video I/F 247. Furthermore, the data control module 2403 transmits information about a VDP job. This refers to a record number indicating what record number a currently printed page is. When receiving an inspection setting registration completion notification from the image forming apparatus 100, the data control module 2403 subsequently transmits a print job. Further, the data control module 2403 transmits a final sheet flag indicating whether a preview image concerned corresponds to a final sheet. If this flag is "0", there is a subsequent sheet, and if the flag is "1", it indicates that the current sheet is a final sheet.

In an inspection setting registration job, the data control module 2403 generates only one set of RIP images and transmits them to the image forming apparatus 100. For example, in a VDP job, when 4 pages are printed per one record, the 4 pages are treated as one set. When a 100-page job is actually submitted, when the 100-page job is configured by repeating the 4-page record by 25 times, not all the images are registered as the preview images.

Programs for the image forming apparatus 100 are stored in the ROM 203, read into the RAM 202, and executed by the CPU 201. A processing function of the CPU 201 is composed of a display control module 2001, a data control module 2002, an image processing control module 2003, a feed control module 2004, a print control module 2005, and an accessory control module 2006.

The display control module 2001 displays a screen operated by a user on the UI unit 101. When the user performs an additional setting of the print job using the UI unit 101, the display control module 2001 stores the print setting information in the RAM 202 in addition to the setting in the information processing apparatus 140. The additional setting of the print job in the image forming apparatus 100 includes an insertion setting for an interleaf sheet such as a job interleaf paper or a copy interleaf sheet, a sheet setting, and the like. Further, when the printing is paused or resumed, a printing execution instruction is transmitted to the data control module 2002.

The data control module 2002 controls reception of a print job or a notification transmitted from the information processing apparatus 140 and transmission of these to the inspection apparatus 150. When receiving the print-job start notification from the information processing apparatus 140, the data control module 2002 stores print setting information or an RIP image received via the NW I/F 207 and the video I/F 217 in the RAM 202. Further, in an inspection setting registration job, the data control module 2002 transmits a preview image generated by the data control module 2403 of the information processing apparatus 140 to the inspection apparatus 150 via the NW I/F 207.

When reception of a preview image and an inspection setting are completed in the inspection apparatus 150 and an inspection setting registration completion notification is received, the data control module 2002 transmits a registration completion notification to the information processing apparatus 140. Note that the preview image may be transmitted from the information processing apparatus 140 to the inspection apparatus 150, and this is not limited.

Furthermore, in this print job, an RIP image (reference image) that is a correct answer for inspection and image mapping information described later are transmitted to the inspection apparatus 150 in parallel with a printing operation described later in the printer 209. Further, an inspection-job start notification is transmitted. The image mapping information includes single/double sided information (a selection between single-sided printing and double-sided printing) based on the print setting information, and also includes rotation and shift amount determined by the print control module 2005 when printing is actually performed on a sheet, a printing side (front/back), and a sheet number, etc. These examples of the image mapping information may include other information and are not limited to them. Furthermore, the data control module 2002 transmits information about the record number received from the information processing apparatus 140.

Note that in the present embodiment, the example has been given in which the printing operation and the transmission operation of the RIP image to the inspection apparatus 150 are performed in parallel within the image forming apparatus 100. However, for example, the information processing apparatus 140 may transmit the RIP image. Further, another hardware device may be disposed between the information processing apparatus 140 and the image forming apparatus 100, and the hardware device may transmit a print image to the image forming apparatus 100 and transmit an RIP image to the inspection apparatus 150.

The image processing control module 2003 controls the image processor 208. The image processing control module 2003 obtains the print setting information and the RIP image that are stored in the RAM 202, and performs an image process to convert them into print data. The image process to convert into print data is, for example, performing rasterization on PDL data, converting it into multi-valued bitmap data, and converting it into binary bitmap data by performing screen process or the like. The binary bitmap data obtained here is transmitted to the printer 209 via the engine I/F 205.

The feed control module 2004 controls the sheet feed deck 260 via the sheet-feed-deck I/F 206. The feed control module 2004 controls to convey a sheet from the sheet feed deck 260 to the printer 209 based on the print setting information stored in the RAM 202.

The print control module 2005 controls the printer 209 via the engine I/F 205. The print control module 2005 issues an instruction to the printer 209 so as to print the binary bitmap data transmitted from the image processing control module 2003 on the sheet that is conveyed according to a conveyance instruction from the feed control module 2004 based on the print setting information. Further, when receiving a notification of pause or resumption of printing from the accessory control module 2006 described later, the print control module 2005 instructs the printer 209 to stop and resume printing based on the notification.

The accessory control module 2006 notifies the large-capacity stacker 120 of the sheet discharge destination via the accessory I/F 204 based on the print setting information stored in the RAM 202, and also receives a notification of pause or resumption of printing from the inspection unit 110 and notifies the print control module 2005.

Programs for the inspection unit 110 are stored in the ROM 213, loaded into the RAM 212, and executed by the CPU 211. A processing function of the CPU 211 is composed of an image scanner control module 2101, a data control module 2102, and an accessory control module 2103.

The image scanner control module 2101 controls the image scanner 216. The image scanner 216 includes, for example, a photographing function equipped with a contact image sensor (hereinafter, CIS), photographs a sheet passing through the inspection unit 110, and outputs a photographed image (a scanned image). Note that the CIS is an example of a sensor of the image scanner 216 and other types of sensors such as a CCD image sensor may be used, and a photographing method thereof is not limited.

The data control module 2102 transmits the scanned image to the inspection apparatus 150 via the communication I/F 214. Further, the data control module 2102 receives setting information about an inspection operation mode described later set in the inspection apparatus 150 and stores it in the RAM 212. Furthermore, the data control module 2102 receives a result of inspection performed in the inspection apparatus 150.

The accessory control module 2103 controls and notifies the image forming apparatus 100 and the large-capacity stacker 120 via the accessory I/F 215 based on the inspection result or the setting information about the inspection operation mode received by the data control module 2102. When switching the sheet discharge destination based on the inspection result, the accessory control module 2103 notifies the large-capacity stacker 120 to discharge printed matter with no defect to the main tray 121 of the discharge unit 225 and to discharge printed matter with a defect to the top tray 122 of the discharge unit 225. Further, in a setting that pauses printing when printed matter with a defect continues for a certain amount, the accessory control module 2103 transmits a notification to stop printing to the image forming apparatus 100 when the certain amount is reached.

Programs for the inspection apparatus 150 are stored in the ROM 253, loaded into the RAM 252, and executed by the CPU 251. A processing function of the CPU 251 is composed of a display control module 2501, a data control module 2502, a reference image generation module 2503, an inspection control module 2504, and a notification module 2505.

The display control module 2501 displays a result of inspection performed by the inspection control module 2504 described later and stored in the RAM 252a and a screen operated by a user on the UI unit 257. When the user performs an inspection setting using the UI unit 257, inspection setting information is stored in the RAM 252.

The data control module 2502 receives a preview image, an RIP image, and image mapping information from the image forming apparatus 100 through the NW I/F 255 and stores them in the RAM 252. When receiving the inspection-job start notification, the data control module 2502 generates a new inspection job and stores it in the RAM 252. Further, the data control module 2502 stores a scanned image sent via the communication I/F 254 in the RAM 252. Furthermore, the data control module 2502 notifies the inspection unit 110 of the inspection result in the inspection control module 2504 or inspection setting information stored in the RAM 252. When receiving a registration completion notification from the reference image generation module 2503 described later, the data control module 2502 transmits a registration completion notification to the image forming apparatus 100.

The reference image generation module 2503 stores an inspection setting received in the UI unit 257 in the RAM 252. Further, the reference image generation module 2503 generates a reference image from an RIP image or image mapping information and stores it in the RAM 252 as a reference image. Furthermore, the reference image generation module 2503 determines whether it is a final sheet based on the final sheet flag or image mapping information. The inspection control module 2504 controls the inspection processor 256.

Hereinafter, an outline of the print image inspection performed by the inspection apparatus 150 will be described. First, the inspection apparatus 150 reads out a scanned image stored in the RAM 252 and a corresponding reference image, and performs inspection by comparison. Specifically, the inspection apparatus 150 extracts feature points from each of the reference image and the scanned image, and based on the extracted feature points, aligns the reference image and the scanned image. When a difference between a pixel value (luminance value) of a pixel to be inspected in the aligned scanned image and a pixel value (luminance value) of a pixel to be compared in the reference image is equal to or less than a threshold value, the inspection apparatus 150 determines that the pixel to be inspected is successful. Note that the threshold value shall be different for each inspection level. This inspection proceeds for each reference image corresponding to each scanned image. Note that when a deviation of a printing position exceeding a certain threshold value has occurred with respect to the reference image when performing alignment, the inspection apparatus 150 determines failure of a positional deviation inspection.

When the inspections of all pixels are completed, the inspection apparatus 150 determines whether the total number of pixels determined as failure is equal to or less than a success threshold value, and determines whether the scanned image is normal. When the total number of pixels determined as failure is equal to or less than the success threshold value, the inspection apparatus 150 determines that the scanned image is normal. When the total number of pixels determined as failure exceeds the success threshold value, the inspection apparatus 150 determines that a scanned image is not normal. Furthermore, the inspection apparatus 150 stores the inspection result including the information about whether the printed matter includes a defect, a type of a detected defect (a spot or a streak), and position information about the defect in the RAM 252. Further, the inspection apparatus 150 determines whether it is a final sheet from image mapping information. The inspection apparatus 150 also determines and processes the inspection operation mode received by the display control module 2501.

Subsequently, an outline of data inspection by the inspection apparatus 150 will be described. The inspection control module 2504 first performs a process to extract data from a character string, a barcode, or a QR code (registered trademark) in the scanned image stored in the RAM 252. This process is performed using glyph font data for character recognition (OCR) set in advance or a barcode standard, and an OCR process is performed for characters and a decoding process is performed for barcodes. The glyph font data associates character shape images with character codes and is needed for OCR in the data inspection and a matching inspection described later. The inspection apparatus 150 can generate the glyph font data by scanning character shapes printed on a sheet, cutting out character images one-by-one, and a user inputting character codes for the respective cut-out character images. The inspection apparatus 150 stores the generated glyph font data in the RAM 252 of the inspection apparatus 150. Here, a method for generating the glyph font data in the present embodiment has been described, but it is not limited to this, and any method may be used as long as a method can generate data in which character images cut out from a scanned image are respectively associated with character codes.

In the data inspection, the inspection apparatus 150 inspects whether a character string or a barcode within an inspection target area is readable. The inspection apparatus 150 determines success when it is readable, and determines failure when it is not readable. Further, the inspection apparatus 150 can also perform a data collation inspection that collates whether a result of a read character string or a barcode, which is extracted data, matches corresponding data (correct answer data) of a correct answer CSV file prepared in advance. Here too, the inspection apparatus 150 determines success when data matches as a result of collation, and determines failure when they do not match. The result of the inspection is stored in the RAM 252. For example, an image of a character string or a barcode read from the printed matter, a result of collation with correct answer data, position information about the read character string or barcode when displaying on the UI unit 257, etc. are stored in the RAM 252.

Furthermore, an outline of the matching inspection by the inspection apparatus 150 will be described. Similarly to the data inspection described above, the inspection apparatus 150 performs the extraction process to extract a character string, a barcode, or a QR code from a scanned image. In the matching inspection, the inspection apparatus 150 determines whether data extracted from all matching target areas match. The inspection apparatus 150 determines success when they match, and determines failure when they do not match. The result of the inspection is stored in the RAM 252. For example, an image of a character string or a barcode read from the printed matter, a result of matching or mismatching of data, position information about the read character string or barcode when displaying on the UI unit 257, etc. are stored in the RAM 252.

After completion of the above-described print image inspection, the data inspection, or the matching inspection, the display control module 2501 instructs the UI unit 257 to display the inspection result stored in the RAM 252. The user recognizes the inspection result displayed on the UI unit 257.

The notification module 2505 notifies the inspection unit 110 of the inspection operation mode and the inspection result performed by the inspection control module 2504 and stored in the RAM 252 via the communication I/F 254.

Programs for the large-capacity stacker 120 are stored in the ROM 223, loaded into the RAM 222, and executed by the CPU 221. A processing function of the CPU 221 is composed of an accessory control module 2201.

The accessory control module 2201 controls the discharge unit 225. The accessory control module 2201 receives a sheet discharge notification from the image forming apparatus 100 or the inspection unit 110, and discharges a printed sheet to the main tray 121 or the top tray 122 of the discharge unit 225 based on the content of the received notification. Further, when the discharge is completed, the accessory control module 2201 transmits an out-of-machine discharge notification to the image forming apparatus 100 and the inspection unit 110 to inform that the printed matter has been discharged without occurrence of a paper jam in the image forming apparatus 100, the inspection unit 110, or the large-capacity stacker 120.

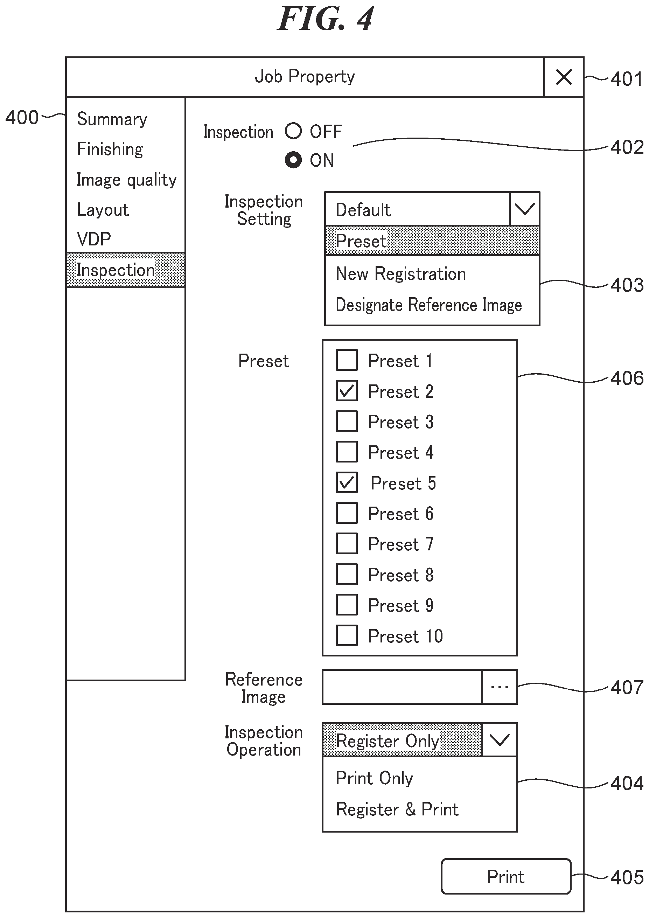

Next, selection of an inspection method of an inspection job and an operation of a print job in the present disclosure will be described using FIG. 4.

FIG. 4 is a diagram illustrating an example of an inspection method selection screen 400 for receiving a print job setting from a user in the client PC 130 in FIG. 1. In the present embodiment, the display control module 2301 executed by the CPU 231 displays the inspection method selection screen 400 on the UI unit 235, and receives input from a user and stores it to the RAM 232. A print job generated in the client PC 130 is transmitted to the information processing apparatus 140 and managed by the information processing apparatus 140.

When selecting "ON" in an inspection mode setting section 402, the user performs subsequent property settings. Here, a print job set with inspection "ON" is called a "inspection job". Note that when the user selects "OFF", the following sections 403 to 407 may be grayed out so as not to receive a user selection. When the user selects "OFF", the print job is treated as a normal print job that does not perform inspection. Further, when a print button 405 is pressed, the print control module 2005 of the image forming apparatus 100 performs a normal printing operation.

When selecting "ON", the user can select an area to be inspected and a method for setting a level thereof in an inspection setting section 403. When "Default" is selected in the inspection setting section 403, the inspection control module 2504 of the inspection apparatus 150 performs inspection of an entire image at a standard level.

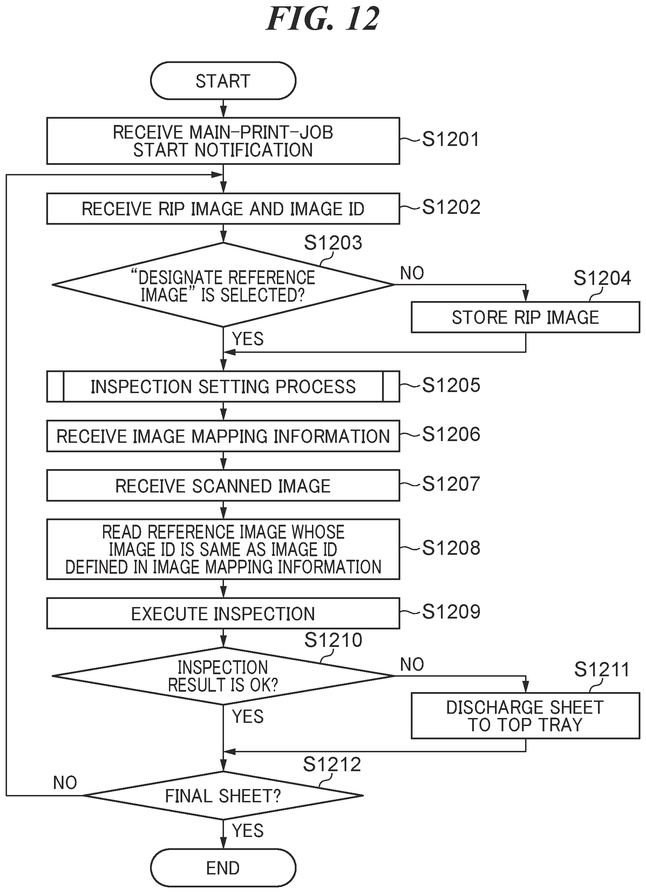

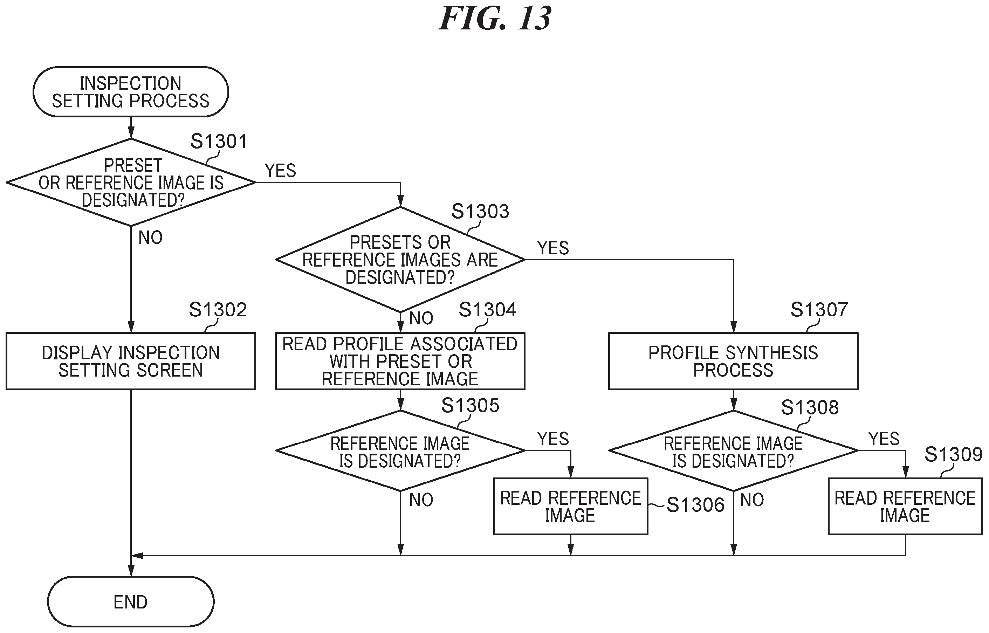

When "Preset" is selected in the inspection setting section 403, inspection settings "Preset 1" to "Preset 10" become selectable on a preset number setting section 406. The inspection control module 2504 performs inspection based on an area and a level designated in advance. The inspection settings "Preset 1" to "preset 10" are stored in the RAM 252 of the inspection apparatus 150. Further, a plurality of preset numbers can be designated on the preset number setting section 406. A designated preset is transmitted to the inspection apparatus 150 in a step S1201 in FIG. 12, and the inspection setting is read out in a step S1205 of which details will be described in a flowchart in FIG. 13. Particularly, when a plurality of presets are designated, the inspection settings of the designated presets are synthesized in a step S1307 in FIG. 13. Note that details of FIG. 12 and FIG. 13 will be described later.

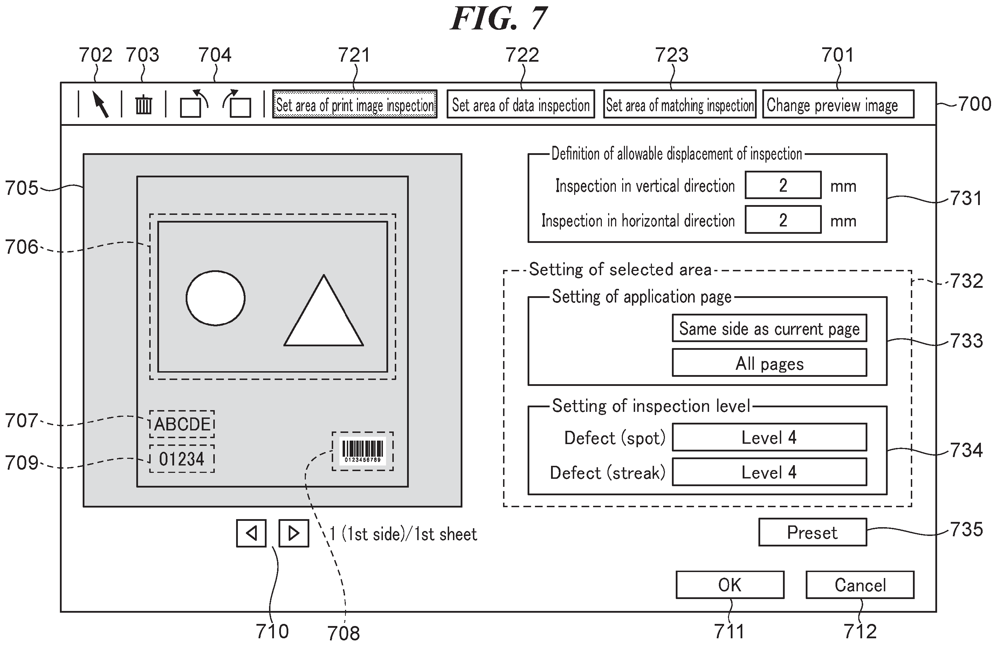

When selecting "New Registration" in the inspection setting section 403, the user newly generates an inspection setting, and the inspection control module 2504 performs inspection based on the inspection setting. When reception of a preview image is completed, the display control module 2501 of the inspection apparatus 150 displays an inspection setting screen 700 shown in FIG. 7 on the UI unit 257. Note that details of the inspection setting screen 700 will be described later. The user newly generates an inspection setting for the preview image, and the inspection control module 2504 of the inspection apparatus 150 performs inspection based on the inspection setting. Note that when something other than "New Registration" is selected in the inspection setting section 403 and the print button 405 is pressed, the display control module 2501 does not display the inspection setting screen 700. When the print button 405 on the inspection method selection screen 400 is pressed by a user operation, the inspection apparatus 150 executes an inspection setting registration job or a main print job according to the setting content in an inspection operation setting section 404.

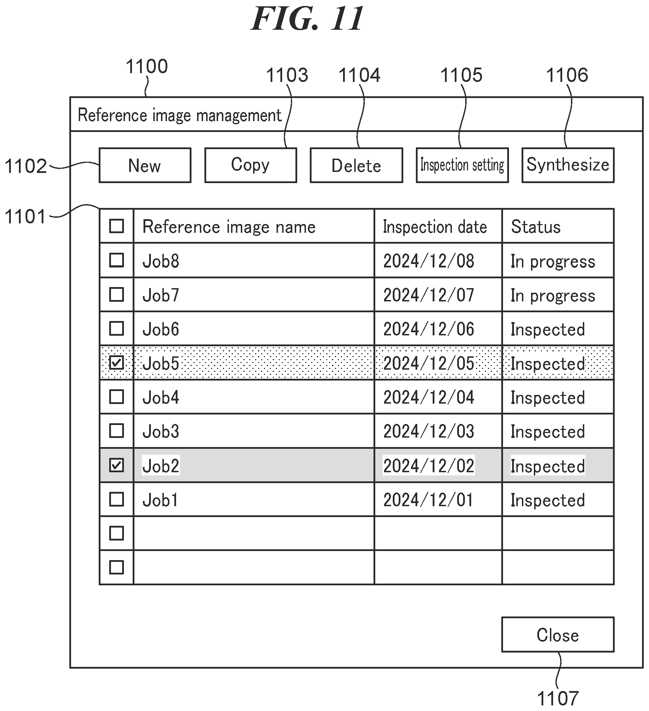

When "Designate Reference Image" is selected in the inspection setting section 403, the user can designate a reference image in a reference image designation section 407. Note that a screen for setting a reference image will be described later using FIG. 11. The inspection control module 2504 performs inspection based on a reference image, an area, and a level designated in advance. The reference image, area, and level are stored in the RAM 252 of the inspection apparatus 150.

The user can select registration of the inspection setting, a combination of operations for a main print job in the inspection operation setting section 404. When "Register Only" is selected, the reference image generation module 2503 of the inspection apparatus 150 only stores the preview image and registers the inspection setting. When "Print Only" is selected, the print control module 2005 of the image forming apparatus 100 performs printing using the inspection setting registered in advance and in parallel, the inspection control module 2504 of the inspection apparatus 150 generates and inspects the reference image. When "Register & Print" is selected, the operations of "Register Only" described above and the operations of "Print Only" are performed continuously.

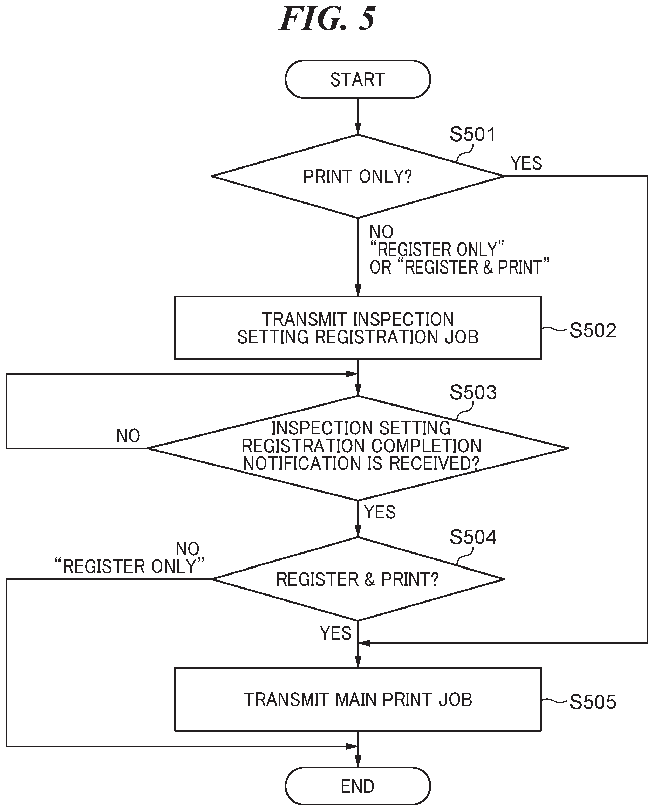

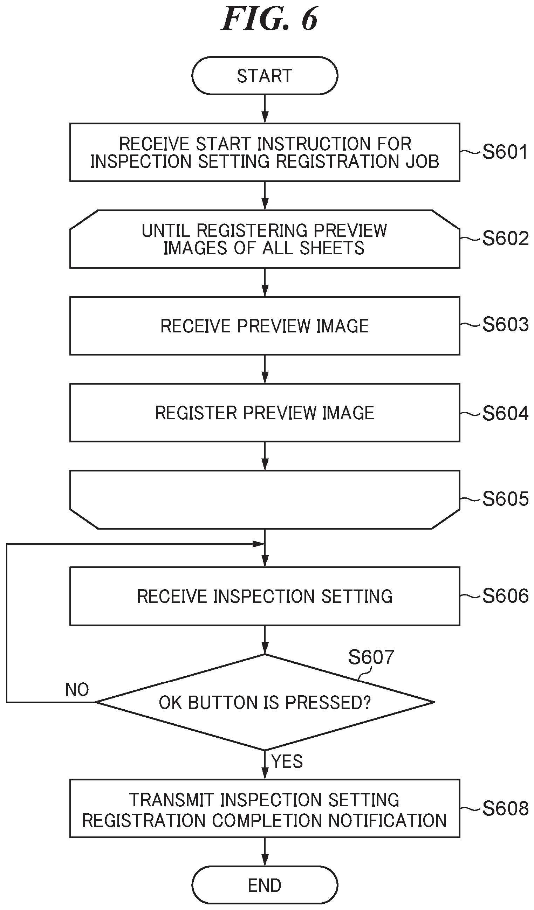

Note that the process to generate a preview image and storing an inspection setting will be described later using the flowchart in FIG. 6. Finally, when the print button 405 is pressed, the display control module 2301 stores the settings input in the sections 402 to 404 in the RAM 232. Further, the data control module 2302 executed by the CPU 231 of the client PC 130 transmits the print job to the information processing apparatus 140. The data control module 2403 executed by the CPU 241 of the information processing apparatus 140 controls execution of printing and inspection based on the print setting information about the received print job. Details of operations of the printing and inspection according to the setting will be described using FIG. 5. When a close button 401 is pressed, the screen closes without storing the settings on this screen in the RAM 232.

FIG. 5 is a flowchart illustrating a procedure of a job transmission process executed by the information processing apparatus 140 in FIG. 1. This flowchart is achieved by the CPU 241 of the information processing apparatus 140 expanding a program code stored in the ROM 243 into the RAM 242, and reading out and executing the program code expanded in the RAM 242.

In FIG. 5, first, in a step S501, the data control module 2403 executed by the CPU 241 determines whether the set value set in the inspection operation setting section 404 is "Print Only". When it is determined that the set value set in the inspection operation setting section 404 is "Print Only", the procedure proceeds to a step S505 described later. When it is determined that the set value set in the inspection operation setting section 404 is not "Print Only", that is, when the set value is "Register Only" or "Register & Print", the procedure proceeds to a step S502.

In the step S502, the data control module 2403 transmits an inspection setting registration job to the image forming apparatus 100. Here, a preview image to be displayed on the UI unit 257 of the inspection apparatus 150 is transmitted when the user performs the inspection setting. Since the preview image is used for display, it is an RIP image with a lower resolution than that used for printing. Note that the preview image is displayed so that the user can easily set a position or an area of inspection, and is not used for actual inspection. When receiving the inspection setting registration job, the image forming apparatus 100 transmits a start notification of the inspection setting registration job to the inspection apparatus 150. By this, the inspection apparatus 150 starts an inspection setting registration process in FIG. 6 described later.

Next, in a step S503, the data control module 2403 determines whether an inspection setting registration completion notification has been received from the inspection apparatus 150. Note that a registration operation of an inspection setting by the inspection apparatus 150 will be described later using FIG. 6. The data control module 2403 waits until receiving the inspection setting registration completion notification from the inspection apparatus 150, and when receiving the inspection setting registration completion notification from the inspection apparatus 150, the procedure proceeds to a step S504.

In the step S504, the data control module 2403 determines whether the set value set in the inspection operation setting section 404 is "Register & Print". When it is determined that the set value set in the inspection operation setting section 404 is not "Register & Print", that is, when the set value set in the inspection operation setting section 404 is "Register Only", this procedure ends. When it is determined that the set value set in the inspection operation setting section 404 is "Register & Print", the procedure proceeds to the step S505.

In the step S505, the data control module 2403 transmits a main print job for inspection to the image forming apparatus 100. As described using the block diagram in FIG. 3 above, in the main print job, the image forming apparatus 100 prints with the printer 209 and transmits the RIP image to the inspection apparatus 150 in parallel. When all the RIP images have been transmitted and printed, this procedure ends.

FIG. 6 is a flowchart illustrating a procedure of the inspection setting registration process executed by the inspection apparatus 150 in FIG. 1. A program related to this flowchart is stored in the ROM 253 of the inspection apparatus 150, read into the RAM 252, and executed by the CPU 251.

In FIG. 6, first, in a step S601, the data control module 2502 executed by the CPU 251 of the inspection apparatus 150 receives the start notification of the inspection setting registration job from the image forming apparatus 100. Next, the procedure proceeds to a step S602, and processes in steps S603, S604, and S605 are repeatedly executed until preview images of all sheets are stored in the RAM 252 of the inspection apparatus 150.

In the step S603, the data control module 2502 receives a preview image generated by the image processing control module 2402 of the information processing apparatus 140. Note that the print setting information may be received from the information processing apparatus 140 or the client PC 130.

Next, in the step S604, the reference image generation module 2503 registers the preview image received in the step S603. The registered preview image is stored in the RAM 252.

Next, the procedure proceeds to the step S605, and the processes in the steps S602 to S605 are repeatedly executed until the reference image generation module 2503 determines that preview images of all sheets have been registered. Note that this determination is performed based on information indicating that it is a final sheet including a preview image.

When the reference image generation module 2503 determines that the preview images of all the sheets have been registered, this procedure proceeds to a step S606. In the step S606, the data control module 2502 receives the inspection setting from the user. Note that the inspection setting will be described in detail using FIG. 7 described later.

Next, in a step S607, the data control module 2502 determines whether an OK button 711 on the inspection setting screen 700 in FIG. 7 described later is pressed. When it is determined that the OK button 711 is not pressed, this procedure returns to the step S606. When it is determined that the OK button 711 is pressed, this procedure proceeds to a step S608.

In the step S608, the data control module 2502 transmits the inspection setting registration completion notification to the image forming apparatus 100. At this time, the inspection setting received from the user is stored in the RAM 252. Thereafter, this procedure ends.

Next, the inspection setting will be described using FIG. 7. FIG. 7 is a diagram illustrating an example of the inspection setting screen 700 displayed on the UI unit 257 of the inspection apparatus 150 in FIG. 2.

A preview image change button 701 is pressed when changing a preview image. An inspection area selection button 702 is pressed by the user when wanting to select an already set area. An inspection area delete button 703 is pressed by a user when wanting to delete a selected area. A rotation button 704 is pressed when wanting to rotate an image displayed in a display area 705.

A read preview image is displayed in the display area 705. When there are a plurality of read sheets, a displayed image can be switched by pressing one of switch buttons 710. When receiving pressing of the OK button 711, the reference image generation module 2503 stores settings on the inspection setting screen 700 in the RAM 252. Here, the number of pages of the preview images and the inspection setting are stored in association.

A cancel button 712 is pressed when instructing cancellation of the inspection job without storing the settings on the inspection setting screen 700. A print image inspection area setting button 721 is pressed by the user when newly setting a print image inspection area. After pressing the print image inspection area setting button 721, the user can set the print image inspection area for the preview image displayed in the area 705. An area 706 shows a setting example of the print image inspection area.

A data inspection area setting button 722 is pressed by the user when newly setting a data inspection area. The data inspection area means a character inspection area or a barcode inspection area. After pressing the data inspection area setting button 722, the user can set the data inspection area in the preview image displayed in the area 705. An area 707 shows a setting example of the character inspection area. An area 708 shows a setting example of the barcode inspection area.

A matching inspection area setting button 723 is pressed by a user when newly setting a matching inspection area. After pressing the matching inspection area setting button 723, the user can set a matching inspection area in the preview image displayed in the area 705. An area 709 shows a setting example of the matching inspection area.

Although the areas 706, 707, 708, and 709 are displayed with the same black dotted lines, they may be displayed distinguishably as areas that are subjected to the different processes. For example, frames of areas that are subjected to the different processes may be displayed with different colors or dashed lines, or the like. Further, those frame display colors may be selectable by the user.

Serial number inspection may be performed in addition to the above-described print image inspection, character inspection, barcode inspection, and matching inspection. The serial number inspection inspects whether character strings in inspection areas in a plurality of images follow a predetermined rule. After receiving an inspection area from the user, the predetermined rule for performing inspection is received. The predetermined rule may include a start number, an end number, an increase/decrease number, etc.

A setting item 731 is a setting for positional deviation inspection, and sets an allowable deviation amount of a printing position with respect to a reference image. The present embodiment shows an example specified by a user when detecting a positional deviation amount of 2 mm or more. That is, a value specified by a user here corresponds to a threshold value in positional deviation detection. When a deviation equal to or greater than the threshold value set here is detected, it is determined as inspection NG.

A setting area 732 is a group of Uls for performing settings for an area currently selected in the area 705.

A setting item 733 is used to set an application area in a selected area. When nothing is selected, a selected inspection area is placed only in a page currently displayed in the area 705. When "Same side as current page" is selected, the selected inspection area is placed on a page of a same side according to whether the selected inspection area is placed on a front side or a back side of a sheet. Since an RIP quality check manages printed matter in sheet units but in page units, the setting of the application range may be "Odd page" or "Even page". When "All pages" is selected, the selected inspection area is placed on all pages.

A setting item 734 is used to set detection levels of a circular defect (a spot) and a linear defect (a streak). A detection level is a parameter set for each stage as a size of abnormality to be determined as a defect for each feature (circular or linear) of a detected defect. For example, there are 5 stages from level 1 to level 5, and the more the level is, the stricter the inspection is. That is, the level 5 can determine a thinner and smaller sized abnormality as a defect than the level 1. Further, the user can select an inspection level for each inspection feature. The setting item 734 indicates that the inspection level 4 is set for a defect (a spot) and the inspection level 4 is set for a defect (a streak).

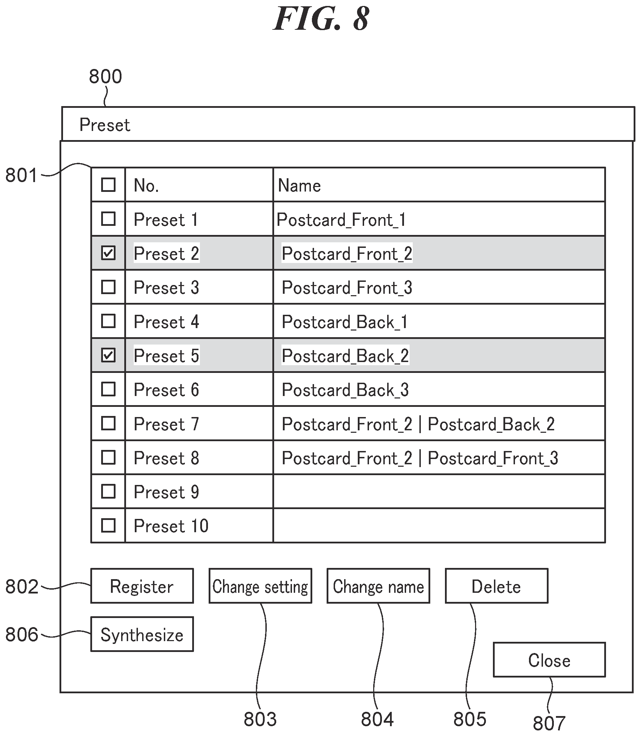

A preset button 735 is pressed when opening a preset setting screen 800 in FIG. 8 described later. In the preset setting screen 800, editing, deletion, etc. of a preset are possible. Note that details of the preset setting screen 800 will be described later in FIG. 8.

As described using the block diagram in FIG. 3, a preview image displays only for one set in a print job, and a user registers an inspection setting for only one set. When contents of images are different but arrangement of printed images is the same, an inspection area can be periodically and repeatedly assigned, which removes necessity of repeatedly setting the same inspection setting many times by user operations.

A method for applying an inspection area for one set to all pages of a print job to inspect will be described in detail using a flowchart of an inspection operation in FIG. 12 described later.

Next, the preset setting will be described using FIG. 8. FIG. 8 is a diagram illustrating an example of the preset setting screen 800 displayed on the UI unit 257 of the inspection apparatus 150 in FIG. 2. The preset setting screen 800 includes a preset list 801, a preset registration button 802, an inspection setting change button 803, a name change button 804, a delete button 805, a synthesis button 806, and a close button 807.

In the preset list 801, a list of presets stored in the RAM 252 is displayed. Each preset has a check box, and a plurality of presets can be selected. FIG. 8 represents a screen example when the preset 2 and the preset 5 are selected.

When the preset registration button 802 is pressed after selecting a preset number in the preset list 801, an inspection setting set in the inspection setting screen 700 can be registered for the selected preset number.

When the inspection setting change button 803 is pressed after selecting a preset number in the preset list 801, the inspection setting screen 700 corresponding to the selected preset number is opened and the inspection setting can be changed.

When the name change button 804 is pressed after selecting a preset number in the preset list 801, the name of the selected preset displayed in "name" can be changed.

When the delete button 805 is pressed after selecting a preset number in the preset list 801, the inspection setting registered in the selected preset can be deleted.

When the synthesis button 806 is pressed after selecting a plurality of preset numbers in the preset list 801, a plurality of inspection settings respectively corresponding to the plurality of selected preset numbers can be synthesized. Note that a synthesis process of presets will be described later using FIG. 13.

When the close button 807 is pressed, the preset setting screen 800 is closed.

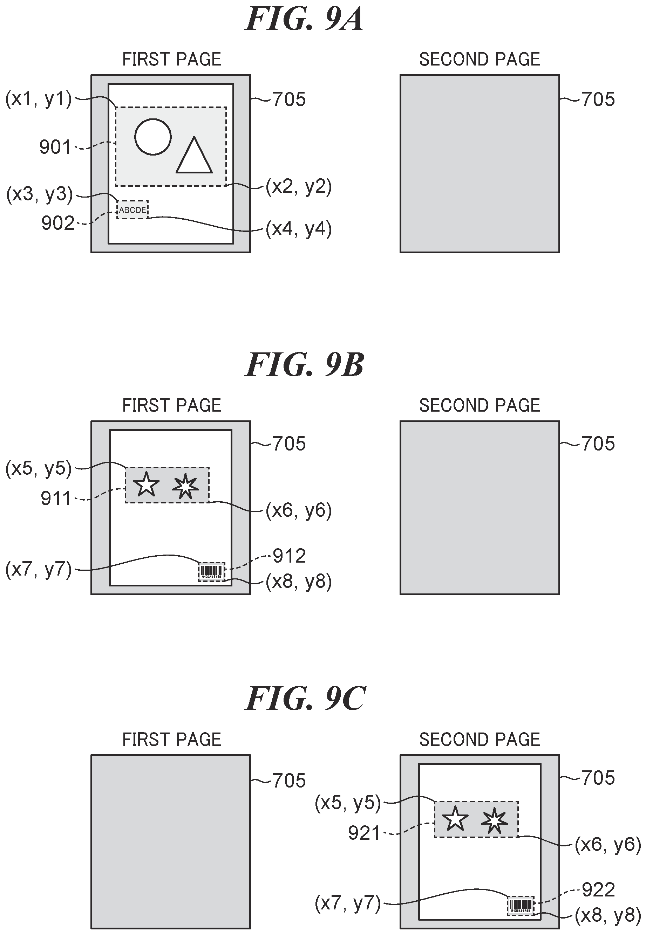

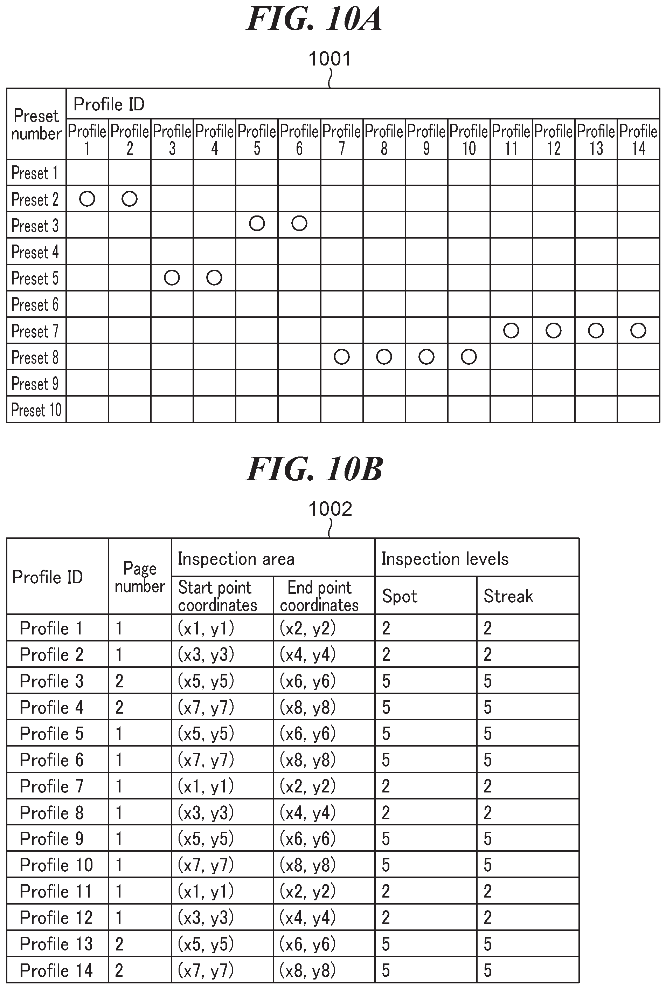

Next, a storing method a preset, preview display, and an inspection setting will be described using FIGS. 9A to 9E and FIGS. 10A to 10C.

FIGS. 9A to 9E are examples of previews displayed in the area 705 on the inspection setting screen 700 in FIG. 7. Although only previews of a first page and a second page are shown in FIGS. 9A to 9E as an example, third and subsequent pages can be similarly displayed.

FIGS. 10A to 10C are tables representing a method for storing an inspection setting in the present embodiment.

FIG. 10A is a diagram illustrating an example of a preset table 1001. The preset table 1001 stores relationship between a preset number and a profile ID described later. For example, a preset 2 indicates that it is an inspection setting in which a profile 1 and a profile 2 become effective.

FIG. 10B is a diagram illustrating an example of a profile table 1002. Whenever the inspection setting is performed using the print image inspection area setting button 721 on the inspection setting screen 700, a profile ID is added to the profile table 1002 and a page number, an inspection area, and inspection levels are stored in association. In fields of start point coordinates and end point coordinates of an inspection area, coordinates of a rectangular inspection area specified in the inspection setting screen 700 are stored. In fields of inspection levels, inspection levels for a spot and a streak set in the setting item 734 on the inspection setting screen 700 are stored. Note that a type of an inspection area that can be set by the area setting buttons 721 to 723 may be stored in the profile table 1002.

FIG. 9A is a diagram illustrating an example of a preview of the inspection setting registered in the preset 2. An inspection area 901 and an inspection area 902 are set on a first page, and the inspection level 2 is set for both a spot and a streak. In the preset table 1001, it is represented that the preset 2 enables the profile 1 and the profile 2. As shown in the profile table 1002, the page number (1), inspection area ((x1, y1), (x2, y2)), and inspection level (2) are stored in the profile 1, and the page number (1), inspection area ((x3, y3), (x4, y4)), and inspection level (2) are stored in the profile 2.

FIG. 9B is a diagram illustrating an example of a preview of the inspection setting registered in the preset 3. An inspection area 911 and an inspection area 912 are set on a first page, and the inspection level 5 is set for both a spot and a streak. Since the inspection level is higher than that for the inspection areas 901 and 902, an area color is displayed darkly. In the preset table 1001, it is represented that the preset 3 enables a profile 5 and a profile 6. As shown in the profile table 1002, the page number (1), inspection area ((x5, y5), (x6, y6)), and inspection level (5) are stored in the profile 5, and the page number (1), inspection area ((x7, y7), (x8, y8)), and inspection level (5) are stored in the profile 6.

FIG. 9C is a diagram illustrating an example of a preview of the inspection setting registered in the preset 5. An inspection area 921 and an inspection area 922 are set on a second page, and the inspection level 5 is set for both a spot and a streak. The inspection setting set on the first page in the preset 3 is set on the second page in the preset 5. Therefore, the inspection area and the inspection level in the preset 5 are the same as that in the preset 3, but the page numbers are different. In the preset table 1001, it is represented that the preset 5 enables a profile 3 and a profile 4. As shown in the profile table 1002, the page number (2), inspection area ((x5, y5), (x6, y6)), and inspection level (5) are stored in the profile 3, and the page number (2), inspection area ((x7, y7), (x8, y8)), and inspection level (5) are stored in the profile 4.

In the preceding section, the method for designating a preset that stores only the inspection setting about the page number, inspection area, and inspection level using the preset table 1001 and the profile table 1002 is described. In the following section, a method for storing an inspection setting for a reference image and utilizing the inspection setting by designating a reference image will be described.

FIG. 11 is a diagram illustrating an example of a reference image management screen 1100 displayed on the UI unit 257 of the inspection apparatus 150 in FIG. 2. The reference image management screen 1100 is displayed on the UI unit 257 by pressing a button on the reference image designation section 407 described above. The reference image management screen 1100 includes a reference image list 1101, a new registration button 1102 for a reference image, a copy button 1103, a delete button 1104, an inspection setting button 1105, a synthesis button 1106, and a close button 1107.

In the reference image list 1101, a list of reference images stored in the RAM 252 is displayed. In the reference image list 1101, a plurality of check boxes respectively corresponding to a plurality of reference images are provided, and a plurality of check boxes are selectable. FIG. 11 represents a screen when a job 2 and a job 5 are selected as an example. Also, when a plurality of check boxes are selected, a row selected first is highlighted. Note that highlighting is an example, and this is not limited as long as the row selected first can be differentiated from other selected rows. Further, an item for designating a row to be distinguishably displayed may be newly provided. An image of the highlighted row is used as a master reference image in the flowchart in FIG. 13 described later.

After pressing the new registration button 1102, a scanned image or an RIP image can be registered as a reference image.

When the copy button 1103 is pressed after selecting a reference image in the reference image list 1101, the selected reference image (including the inspection setting) is copied.

When the delete button 1104 is pressed after selecting a reference image in the reference image list 1101, the selected reference image is deleted.

When the inspection setting button 1105 is pressed after selecting a reference image in the reference image list 1101, the inspection setting screen 700 is opened, and an inspection setting for the reference image is allowed.

When the synthesis button 1106 is pressed after selecting a plurality of reference images in the reference image list 1101, a plurality of inspection settings respectively associated with the plurality of reference images are synthesized. Note that a synthesis flow of an inspection setting will be described later using FIG. 13.

When the close button 1107 is pressed, the reference image management screen 1100 is closed.

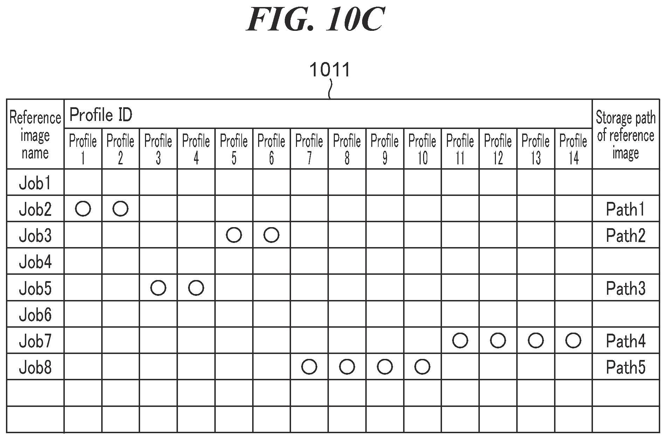

In the present embodiment, the inspection setting is managed by the profile table 1002 described above and a reference image table 1011 shown in FIG. 10C. The reference image table 1011 stores relationship between a reference image name and a profile ID. For example, it is indicated that the job 2 is the inspection setting that enables the profile 1 and the profile 2. Furthermore, in the reference image table 1011, a storage path of a reference image stored in the RAM 252 is managed, and it is possible to call a reference image corresponding to a designated reference image name.

For example, a preview of a reference image and an inspection setting registered in the job 2 is as shown in FIG. 9A. The inspection areas 901 and 902 are set on the first page, and the inspection level 2 is set for both a spot and a streak. In the reference image table 1011, the row of the job 2 represents that the profile 1 and the profile 2 are effective. As shown in the profile table 1002, the page number (1), inspection area ((x1, y1), (x2, y2)), and inspection level (2) are stored in the profile 1, and the page number (1), inspection area ((x3, y3), (x4, y4)), and inspection level (2) are stored in the profile 2.

Next, a procedure of the inspection process will be described using the flowchart in FIG. 12.

FIG. 12 is the flowchart illustrating the procedure of the inspection process executed by the inspection apparatus 150 in FIG. 1. The inspection process in FIG. 12 is achieved by the CPU 251 of the inspection apparatus 150 reading out a program stored in the ROM 253 into the RAM 252 and executing it.

In FIG. 12, first, in a step S1201, the data control module 2502 executed by the CPU 251 of the inspection apparatus 150 receives a main-print-job start notification from the image forming apparatus 100. This main-print-job start notification includes information about the options designated in the inspection setting section 403, the preset number setting section 406, the reference image designation section 407, and the inspection operation setting section 404 described in FIG. 4 above. In the image forming apparatus 100 that has transmitted the main-print-job start notification, the print control module 2005 executed by the CPU 201 instructs the printer 209 to print. Accordingly, the printer 209 starts printing and outputs printed matter. The printed matter is conveyed from the image forming apparatus 100 to the inspection unit 110. When the printed matter is conveyed to the inspection unit 110, the image scanner control module 2101 executed by the CPU 211 in the inspection unit 110 instructs the image scanner 216 to scan. Accordingly, the image scanner 216 scans the printed matter and generates a scanned image.

Next, in a step S1202, the data control module 2502 receives an RIP image and an image ID (an ID for uniquely identifying an image) from the image forming apparatus 100. The data control module 2502 stores the RIP image and the image ID in the RAM 252 in association.

Next, in a step S1203, the data control module 2502 determines whether "Designate Reference Image" is selected in the inspection setting section 403. When it is selected, the procedure proceeds to a step S1205, and when it is not selected, the procedure proceeds to a step S1204.

In the step S1204, the reference image generation module 2503 stores the RIP image in the RAM 252.

Next, in the step S1205, the inspection control module 2504 performs an inspection setting process of which details are shown in FIG. 13 described later. Here, any one of a process of setting a new inspection setting, a process of calling an inspection setting from a designated preset, and a process of reading out a reference image and an inspection setting from a designated reference image is implemented. The inspection setting and the reference image, which are set or read out, are stored in the RAM 252.

Next, in a step S1206, the data control module 2502 receives the image mapping information from the image forming apparatus 100. When receiving the image mapping information, the reference image generation module 2503 refers to the image ID of the received image mapping information, and reads out the RIP image of which the image ID matches from the RAM 252. A reference image is generated using the read out RIP image and the image mapping information, and the generated reference image and the image mapping information are stored in the RAM 252. The image mapping information includes information used when printing. In the present embodiment, a reference image corresponding to a situation of printing on a sheet is generated using the image mapping information during the main print job. Here, the reference image generation module 2503 processes the RIP image based on information, such as a rotation amount and a shift amount, to generate a reference image.

Next, in a step S1207, the data control module 2502 receives a scanned image generated by scanning with the image scanner 216 of the inspection unit 110. This scanned image is stored in the RAM 252.

Next, in a step S1208, the inspection control module 2504 executed by the CPU 251 of the inspection apparatus 150 reads out the reference image whose image ID is same as the image ID defined in the image mapping information received in the step S1206 from the RAM 252.

Next, in a step S1209, the inspection control module 2504 inspects the scanned image received in the step S1207 using the reference image read out in the step S1208. In the step S1209, as the inspection, the positional deviation inspection or the like described using the block diagram of the software configuration of the inspection apparatus 150 in FIG. 3 above is performed.

When the inspection is completed, this procedure proceeds to a step S1210. In the step S1210, the inspection control module 2504 determines whether the inspection result is success. When it is success, this procedure proceeds to a step S1212, and when it is failure, this procedure proceeds to a step S1211.

In the step S1211, the inspection control module 2504 controls the accessory control module 2201 of the large-capacity stacker 120 via the inspection unit 110 so as to discharge the sheet to the top tray 122. As a result, the sheet of failure is discharged to the top tray 122.

Next, in the step S1212, the inspection control module 2504 determines whether an inspected sheet is the final sheet of the inspection job based on the image mapping information. When it is not the final sheet, the procedure returns to the step S1202, and the processes of generation of a reference image and inspection are continuously performed until it becomes the final sheet. When it is the final sheet, this procedure ends.

FIG. 13 is a flowchart illustrating a procedure of the inspection setting process in the step S1205 in FIG. 12. Note that the inspection setting process is executed, for example, when the user issues a submission instruction of a print job on the inspection method selection screen 400 of the client PC 130 as described above and the main-print-job start notification according to the submission instruction is received from the image forming apparatus 100. Note that the inspection setting process is also executed at other timings. For example, the inspection setting process is executed when the synthesis button 806 on the preset setting screen 800 of the inspection apparatus 150 or the synthesis button 1106 on the reference image management screen 1100 is pressed.

In FIG. 13, first, in a step S1301, the data control module 2502 determines whether a preset or a reference image is designated. When there is no such a designation, this procedure proceeds to a step S1302. When there is such a designation, this procedure proceeds to a step S1303.

In the step S1302, the display control module 2501 displays the inspection setting screen 700 on the UI unit 257. In this way, a new inspection setting is received from the user. Note that an inspection setting method is implemented by a procedure described in FIG. 7 above. Thereafter, this procedure ends.

In the step S1303, the data control module 2502 determines whether a plurality of presets or a plurality of reference images are designated. When neither a plurality of presets nor a plurality of reference images are designated, this procedure proceeds to a step S1304. When a plurality of presets or a plurality of reference images are designated, this procedure proceeds to the step S1307 described later.

In the step S1304, the data control module 2502 reads out the profile associated with the designated preset or the designated reference image. For example, when one preset is designated, the data control module 2502 reads out a corresponding profile from the preset table 1001 and the profile table 1002 described above. Further, when one reference image is designated, the data control module 2502 reads out a corresponding profile from the reference image table 1011 and the profile table 1002 described above. A read-out profile is stored in the RAM 252.

Next, in a step S1305, the data control module 2502 determines whether a reference image is designated. When a reference image is not designated, this procedure ends. When a reference image is designated, this procedure proceeds to a step S1306.

In the step S1306, the data control module 2502 reads out the reference image from its storage path defined in the reference image table 1011. The read-out reference image is stored in the RAM 252. Thereafter, this procedure ends.

In the step S1307, the data control module 2502 performs an inspection setting (profile) synthesis process. Specifically, the data control module 2502 reads out the profiles associated with the designated presets or the designated reference images, and synthesizes the read-out profiles. For example, when the presets are designated, the data control module 2502 reads out the corresponding profiles from the preset table 1001 and the profile table 1002 described above, and synthesizes the read-out profiles. Further, when the reference images are designated, the data control module 2502 reads out the corresponding profiles from the reference image table 1011 and the profile table 1002 described above, and synthesizes the read-out profiles. A new profile obtained by synthesis is stored in the RAM 252.

Next, in a step S1308, the data control module 2502 determines whether the reference image is designated. When the reference image is not designated, this procedure ends. When the reference image is designated, this procedure proceeds to a step S1309.

In the step S1309, the data control module 2502 reads out the reference images from their storage paths defined in the reference image table 1011. At this time, the plurality of reference images are read out for one page. As described using FIG. 11, when a plurality of reference images are selected, a row selected first is highlighted on the reference image management screen 1100. The reference image corresponding to the highlighted row is used as a master reference image. Therefore, the reference image corresponding to the highlighted row is stored in the RAM 252, and this procedure ends.

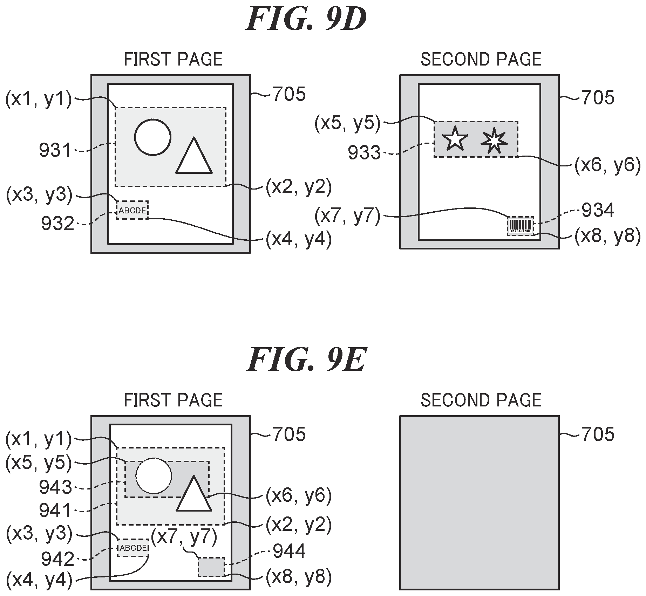

Note that when this process is executed according to pressing of the synthesis button 806 or the synthesis button 1106, a new preset may be added to the preset list 801 or a new reference image may be added to the reference image list 1101. In FIG. 8, a preset 7 that is newly generated by selecting and synthesizing the preset 2 and the preset 5 is displayed as an example of a newly generated preset. Further, a preset 8 that is newly generated by selecting and synthesizing the preset 2 and the preset 3 is displayed as an example of a newly generated preset. Note that previews of inspection settings of the preset 7 and the preset 8 are respectively shown in FIG. 9D and FIG. 9E.

FIG. 9D is a diagram illustrating an example of a preview of the inspection setting registered in the preset 7. The preset 7 is generated by synthesizing the preset 2 and the preset 5. Inspection areas 931 and 932 are set on a first page, and the inspection level 2 is set for both a spot and a streak. Inspection areas 933 and 934 are set on a second page, and the inspection level 5 is set for both a spot and a streak. As shown in the row of the preset 7 in the preset table 1001, a profile 11, a profile 12, a profile 13, and a profile 14 are effective. The profile 11 and the profile 12 are respectively copied from the profile 1 and the profile 2 that are effective in the preset 2. Similarly, the profile 13 and the profile 14 are respectively copied from the profile 3 and the profile 4 that are effective in the preset 5. In the profile table 1002, the page number (1), inspection area ((x1, y1), (x2, y2)), and inspection level (2) are stored in the profile 11, the page number (1), inspection area ((x3, y3), (x4, y4)), and inspection level (2) are stored in the profile 12, the page number (2), inspection area ((x5, y5), (x6, y6)), and inspection level (5) are stored in the profile 13, and the page number (2), inspection area ((x7, y7), (x8, y8)), and inspection level (5) are stored in the profile 14. Although the synthesis method of designating a preset is described as an example in the present embodiment as described above, the inspection settings (profiles) can be similarly synthesized in a method of designating a reference image.

FIG. 9E is a diagram illustrating an example of a preview of the inspection setting registered in the preset 8. The preset 8 is generated by synthesizing the preset 2 and the preset 3. Inspection areas 941, 942, 943, and 944 are set on a first page. The inspection level 2 is set for both a spot and a streak for the inspection areas 941 and 942. The inspection level 5 is set for both a spot and a streak for the inspection areas 943 and 944.

As shown in the row of the preset 8 in the preset table 1001, a profile 7, a profile 8, a profile 9, and a profile 10 are effective. The profile 7 and the profile 8 are respectively copied from the profile 1 and the profile 2 that are effective in the preset 2. Similarly, the profile 9 and the profile 10 are respectively copied from the profile 5 and the profile 6 that are effective in the preset 3.

In the profile table 1002, the page number (1), inspection area ((x1, y1), (x2, y2)), and inspection level (2) are stored in the profile 7, the page number (1), inspection area ((x3, y3), (x4, y4)), and inspection level (2) are stored in the profile 8, the page number (1), inspection area ((x5, y5), (x6, y6)), and inspection level (5) are stored in the profile 9, and the page number (1), inspection area ((x7, y7), (x8, y8)), and inspection level (5) are stored in the profile 10.

In a part where inspection areas overlap, a profile with a higher inspection level may be prioritized. Although the synthesis method of designating a preset is described as an example in the present embodiment as described above, the inspection settings (profiles) can be similarly synthesized in a method of designating a reference image.

According to the embodiment described above, when the user issues a predetermined instruction accompanied by selection of a plurality of different inspection settings, the plurality of inspection settings are synthesized. As a result, the user can use the plurality of stored inspection settings in combination just by issuing the predetermined instruction, and consequently, trouble of setting the inspection setting can be reduced.

Further, in the embodiment described above, the predetermined instruction is a submission instruction of a print job based on a plurality of inspection settings selected by the user. As a result, when the user just selects a plurality of inspection settings and issues a submission instruction of a print job, the inspection can be performed with an inspection setting obtained by synthesizing these plurality of inspection settings.

Further, in the embodiment described above, the predetermined instruction is pressing of the synthesis button 806 on the preset setting screen 800. As a result, when the user just selects a plurality of presets on the preset setting screen 800 and presses the synthesis button 806, the inspection can be performed with an inspection setting obtained by synthesizing the plurality of inspection settings respectively corresponding to the selected presets.

Further, in the embodiment described above, the predetermined instruction is pressing of the synthesis button 1106 on the reference image management screen 1100. As a result, when the user just selects a plurality of reference images on the reference image management screen 1100 and presses the synthesis button 1106, the inspection can be performed with an inspection setting obtained by synthesizing the plurality of inspection settings respectively associated with the selected reference images.

In the embodiment described above, the user cannot confirm a synthesis result on the screen when issuing a synthesis instruction for inspection settings, such as pressing the synthesis button 806 on the preset setting screen 800 or pressing the synthesis button 1106 on the reference image management screen 1100. In contrast, in the following embodiment, a synthesis result of inspection settings is displayed in a preview in real time. In the following, contents different from the embodiment described above will be described, and parts without detailed description shall be similar to the embodiment described above.

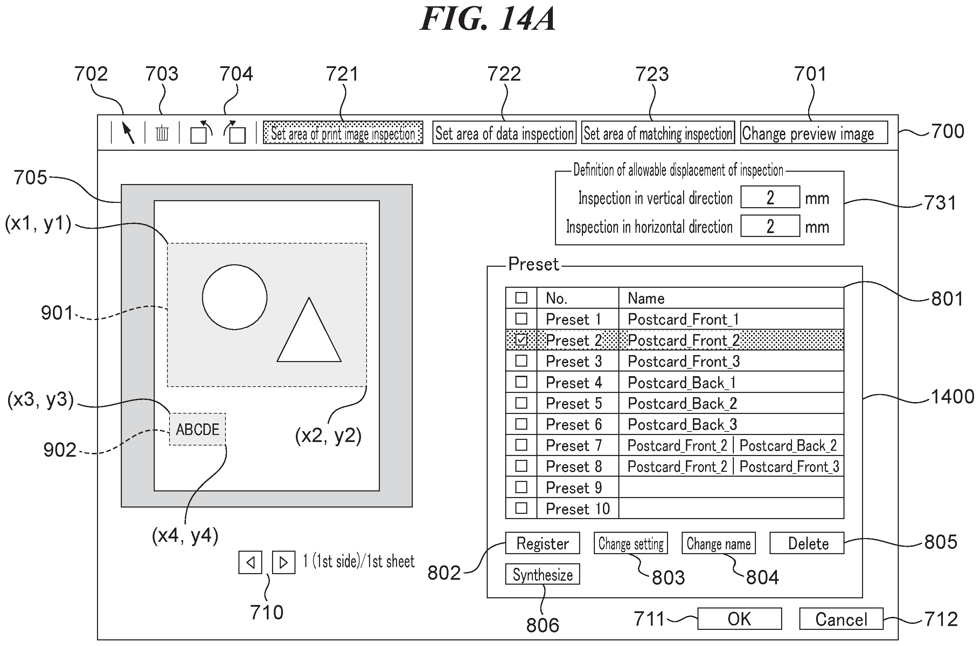

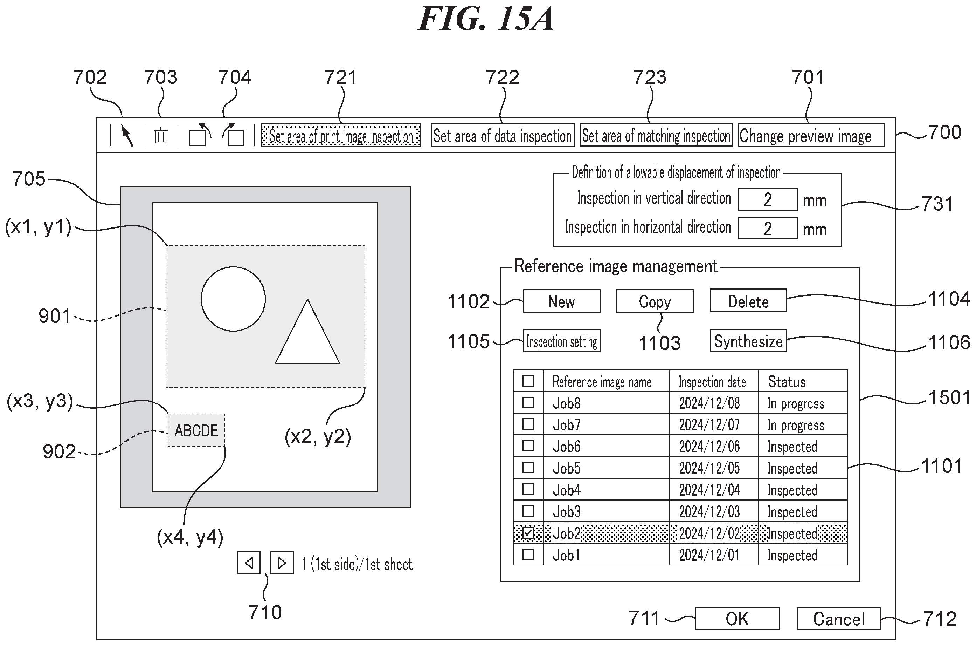

FIGS. 14A to 14C and FIGS. 15A to 15C are diagrams illustrating examples of the inspection setting screen 700 displayed on the UI unit 257 of the inspection apparatus 150 in FIG. 2. Since the items 700 to 731 in the figures are similar to those in FIG. 7, their descriptions are omitted.

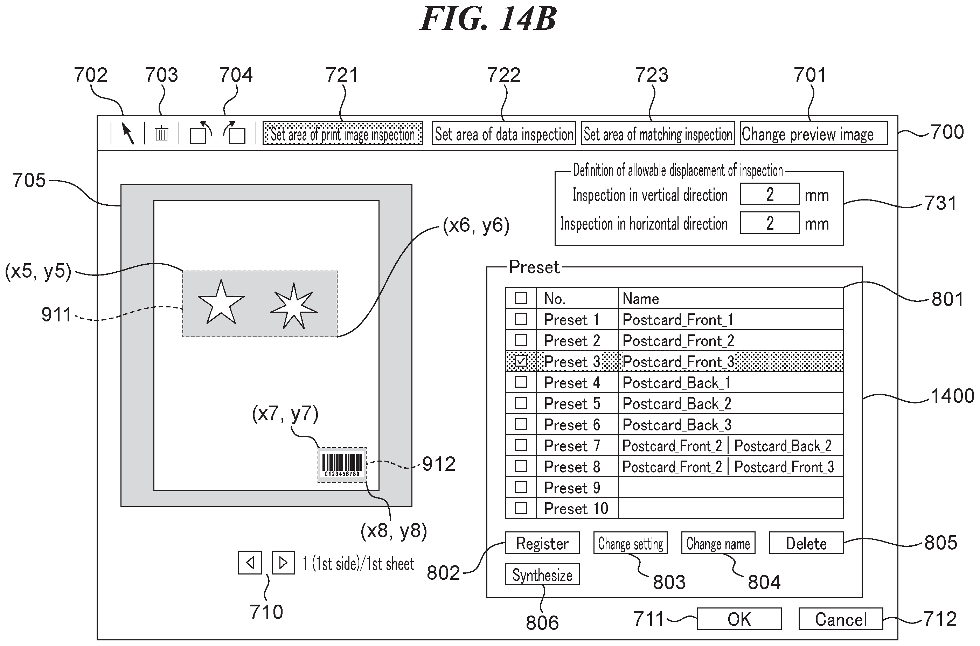

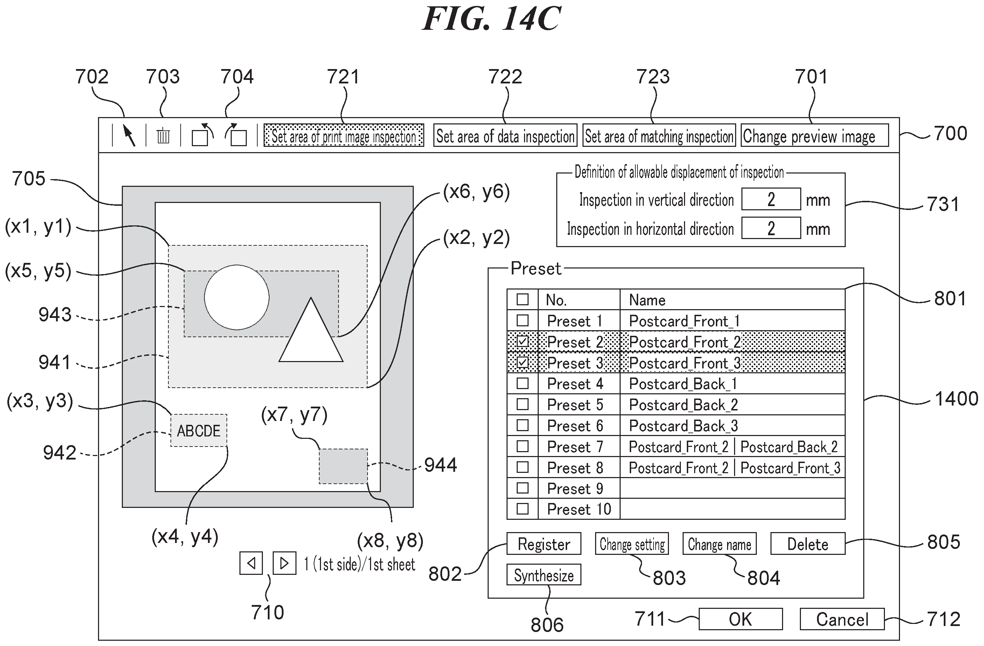

A preset setting area 1400 in FIGS. 14A, 14B, and 14C is a group of Uls to set a preset. Here, the preset list 801 and buttons 802 to 806 shown in FIG. 8 are displayed, and their functions are the same as the functions described using FIG. 8. Note that the inspection setting process is as in the flowchart in FIG. 13.

FIG. 14A is a display example when the preset 2 is selected alone. In the display area 705, the inspection area of the preset 2 and a preview of an inspection setting are displayed. In FIG. 14A, the preview similar to FIG. 9A is displayed.

FIG. 14B is a display example when the preset 3 is selected alone. In the display area 705, the inspection area of the preset 3 and a preview of an inspection setting are displayed. In FIG. 14B, the preview similar to FIG. 9B is displayed.

FIG. 14C is a display example when the preset 2 and the preset 3 are selected. In the display area 705, the inspection area and a preview of an inspection setting obtained by synthesizing preset 2 and preset 3 are displayed. In FIG. 14C, the preview similar to FIG. 9E is displayed.

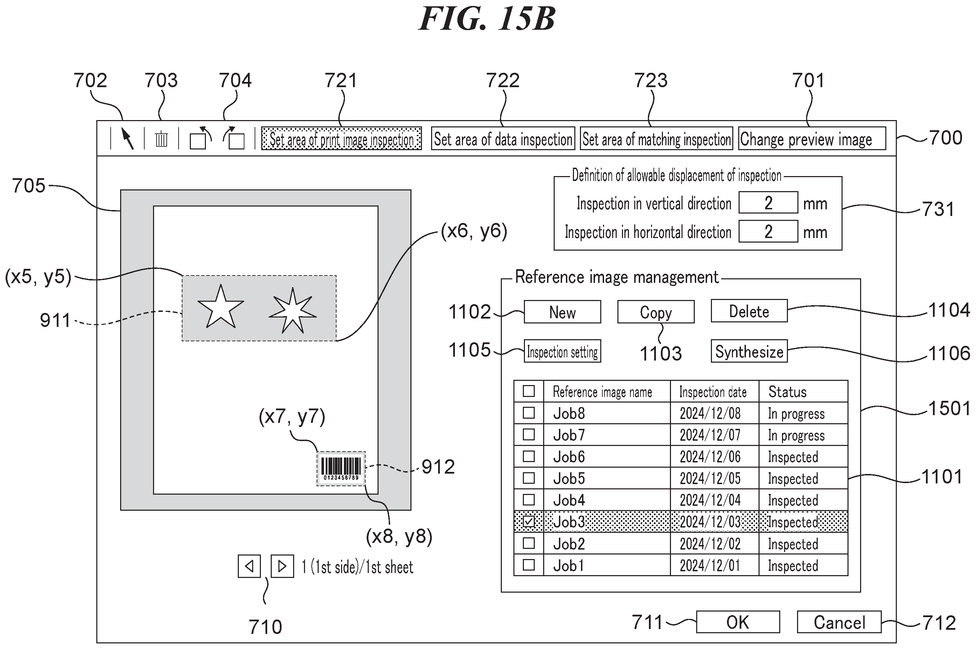

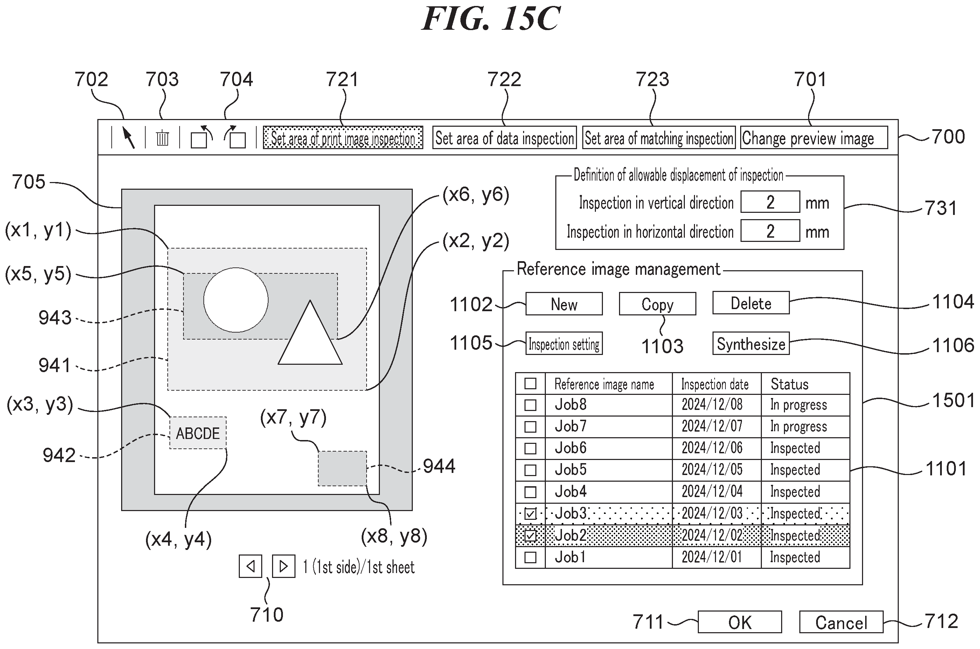

A reference image management area 1501 in FIGS. 15A, 15B, and 15C is a group of Uls to set a reference image. Here, the reference image list 1101 and buttons 1102 to 1106 shown in FIG. 11 are displayed, and their functions are the same as the functions described using FIG. 11. Note that the inspection setting process is as in the flowchart in FIG. 13.

FIG. 15A is a display example when the job 2 is selected alone. In the display area 705, the reference image of the job 2, an inspection area, and a preview of an inspection setting are displayed. In FIG. 15A, the preview similar to FIG. 9A is displayed.

FIG. 15B is a display example when the Job 3 is selected alone. In the display area 705, the reference image of the job 3, an inspection area, and a preview of an inspection setting are displayed. In FIG. 15B, the preview similar to FIG. 9B is displayed.

FIG. 15C is a display example when the job 2 and the job 3 are selected in that order. Here, the job 2 is used as a master. In the display area 705, an inspection area and a preview of an inspection setting obtained by synthesizing the job 2 and the job 3 are displayed. In FIG. 15C, the preview similar to FIG. 9E is displayed.

In the examples shown in FIGS. 14A, 14B, and 14C, the inspection setting screen 700 includes the preset setting area 1400 that allows the user to select presets, and the display area 705 that displays a preview of a new inspection setting obtained by synthesizing inspection settings corresponding to a plurality of presets selected in the preset setting area 1400. Accordingly, the user can instantly understand a result obtained by synthesizing a plurality of presets selected in the preset setting area 1400.

Further, in the examples shown in FIGS. 15A, 15B, and 15C, the inspection setting screen 700 includes the reference image management area 1501 that allows the user to select reference images, and the display area 705 that displays a preview of a new inspection setting obtained by synthesizing inspection settings corresponding to a plurality of reference images selected in the reference image management area 1501. Accordingly, the user can instantly understand a result obtained by synthesizing a plurality of reference images selected in the reference image management area 1501.

Although the preferred embodiments of the present disclosure have been described above, the present disclosure is not limited to these embodiments, and various modifications and changes are possible within a scope of the gist thereof.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An inspection system (10) that inspects printed matter output by an image forming apparatus (100), the inspection system comprising:
a memory device (253) that stores a set of instructions; and
at least one processor (251) that executes the set of instructions to:
store inspection settings used for inspection of the printed matter;
receive a predetermined instruction accompanying selection of a plurality of different inspection settings from among the inspection settings stored from a user; and
synthesize (S1307) the plurality of different inspection settings according to the predetermined instruction.

2. The inspection system according to claim 1, wherein the predetermined instruction is a submission instruction of a print job based on the plurality of different inspection settings selected by the user.

3. The inspection system according to claim 1 or 2, wherein the predetermined instruction is a synthesis instruction for a plurality inspection settings respectively corresponding to a plurality of presets selected by the user.

4. The inspection system according to claim 3, wherein the at least one processor executes instructions in the memory device to display a setting screen to allow the user to set the inspection settings,
wherein the setting screen includes an area to allow the user to select one or more from among the plurality of presets respectively corresponding to the inspection settings stored and an area to display a result obtained by synthesizing the plurality of the inspection settings respectively corresponding to the plurality of presets selected.

5. The inspection system according to any one of claims 1 to 4, wherein the predetermined instruction is a synthesis instruction for a plurality inspection settings respectively associated with a plurality of reference images selected by the user.

6. The inspection system according to claim 5, wherein the at least one processor executes instructions in the memory device to display a setting screen to allow the user to set the inspection settings,
wherein the setting screen includes an area to allow the user to select one or more from among the plurality of reference images respectively corresponding to the plurality of inspection settings stored and an area to display a result obtained by synthesizing the plurality of inspection settings respectively associated with the plurality of reference images selected.

7. The inspection system according to claim 1, wherein the at least one processor executes instructions in the memory device to:
store a plurality of inspection settings as presets; and
manage each of the presets by associating the preset with a profile that includes at least a page number, an inspection area, and an inspection level.

8. The inspection system according to claim 7, wherein the inspection level includes a detection level for each of a circular defect and a linear defect.

9. The inspection system according to claim 1, wherein the at least one processor executes instructions in the memory device to:
store the inspection settings in association with reference images; and
manage the inspection settings by a table that includes storage paths of the reference images.

10. The inspection system according to claim 3, wherein the at least one processor executes instructions in the memory device to add an inspection setting obtained by the synthesis as a new preset.

11. The inspection system according to claim 5, wherein the at least one processor executes instructions in the memory device to use a reference image selected first as a master in a case where the plurality of reference images are selected.

12. The inspection system according to claim 1, wherein the at least one processor executes instructions in the memory device to prioritize an inspection setting having a higher inspection level for a part where inspection areas overlap when synthesizing the plurality of the inspection settings.

13. The inspection system according to claim 4, wherein the setting screen displays a result of the synthesis in a preview in real time according to selection of the plurality of presets by the user.

14. The inspection system according to claim 1, wherein the at least one processor executes instructions in the memory device to inspect the printed matter by comparing a scanned image and a reference image based on the inspection setting synthesized.

15. The inspection system according to claim 1, wherein the reference image is generated based on an RIP image and image mapping information, and the image mapping information includes at least a rotation amount and a shift amount.

16. The inspection system according to claim 1, wherein the at least one processor executes instructions in the memory device to store the inspection setting in association with a number of pages of preview images.

17. The inspection system according to claim 2, wherein the predetermined instruction is a submission instruction of a print job in which a plurality of preset numbers are designated by the user.

18. A control method for an inspection system (10) that inspects printed matter output by an image forming apparatus (10), the control method comprising:
storing inspection settings used for inspection of the printed matter;
receiving a predetermined instruction accompanying selection of a plurality of different inspection settings from among the inspection settings stored from a user; and
synthesizing (S1307) the plurality of different inspection settings according to the predetermined instruction.
